# EUROPEAN PATENT SPECIFICATION

(11) **EP 1 437 876 B1**
(45) Date of publication and mention of the grant of the patent: **16.07.2008**
(21) Application number: 04000048.1
(22) Date of filing: 05.01.2004
(51) Int. Cl.: H04L 29/08, H04L 29/06, G06Q 10/00, G06Q 30/00, A63F 13/12

(54) **Network game system, network game server, and advertisement displaying method**
Netzwerkspielesystem, Spieleserver und Verfahren zum Anzeigen von Werbung
Système de jeu en réseau, serveur de jeu, et méthode d'affichage de publicité

(30) Priority: 09.01.2003 JP 2003003771
(43) Date of publication of application: 14.07.2004
(73) Proprietor: Aruze Corp., Tokyo 135-0063 (JP)
(72) Inventor: Kogo, Junichi, Aruze Corp., Tokyo 135-0063 (JP)
(74) Representative: HOFFMANN EITLE

(56) References cited:
- US-A- 5 848 396
- US-A1- 2002 059 379
- US-A1- 2002 068 592
- US-A1- 2002 098 891
- US-B1- 6 264 560

## Description

### BACKGROUND OF THE INVENTION

### Field of the Invention

The present invention relates to a network game system, a network game server, a method of operating a network game system, and a method of operating a network game server.

### Related Background Art

In recent years, as science and technology have been advancing, high-performance game machines and game programs with attractive representations used in these game machines have been under development. Therefore, irrespective of age or gender, an increasing number of people are enthusiastic about games.

During the time when players are involved in a game, they are less likely to be distracted by things other than the game, thereby losing an opportunity to obtain information from TVs, magazines, newspapers, and the like.

Also, during that time, the players talk less with others, thus decreasing the possibility of getting information by word of mouth.

For such a problem, inventions have been made in order to supply advertisement information to players of a game (see, for example, Japanese Patent Application Laid-Open No. HEI 9-10440).

In such an invention, however, an advertisement screen is merely taken into a part of game images, and fails to have any close relationships with representations of the game.

Also, the same advertisement is displayed for all the players, thus failing to provide an efficient target-specific promotion.

US-A-2002/0098891 discloses a system and method enabling the development and deployment of tailored advertising/messages to consumers utilizing electronic media by integrating advertising messages and equity images into an electronic game, the actions of which are varied as the game is played, based upon the consumer's interaction with the game. The advertising messages are delivered, and useful data is collected, providing puzzles that are about, and centered around, the advertisements and commercial entity's brands themselves. The flow of the game may be based upon predefined rules set up by the commercial entity. The game resides on an Internet server and provides an on-1 ine game to consumers accessing the server over the Internet; players provide certain demographic data before the gaming starts; then the commercial entity's brands and advertising messages are incorporated into the game based upon the players' answers. Furthermore, the flow of the game is determined, at least in part, upon the players' knowledge/perception of a commercial entity's brand, logos, tag/lines, products, competitors, and the like. As the system learns more about each individual consumer playing the on-line game (as a result of gathering demographic data and game playing performance data), the system is able to tailor an advertising strategy towards that particular consumer as the game goes on.

US 6,264,560 B1 discloses a game playing method and apparatus for automating games such as blackjack, poker, craps, roulette, baccarat and pai gow, wherein players may play continuously and asynchronously, and information related to advertised items can be exchanged between players and advertisers. Each instance of a game is likely unique from all other current game instances. The games do not require a manual dealer and are played in a gaming establishment using low cost gaming stations. The method may also be used to play such games on the Internet or an interactive cable television network wherein a game controller communicates with players at network nodes in their homes and at their leisure since there is no game tempo requirement. During a game, advertising is selectively provided by comparing player personal information with a desired demographic profile. Player responses to advertising are used for evaluating advertising effectiveness.

### SUMMARY OF THE INVENTION

According to the present invention, there is provided a network game system as set out in Claim 1.

The present invention also provides a network game server as set out in Claim 6.

The present invention also provides a method of operating a network game system as set out in Claim 11.

The present invention further provides a method of operating a network game server as set out in Claim 12.

Optional features are set out in the other claims.

An embodiment of the present invention provides a network game system, a network game server, and an advertisement displaying method which can display different advertisements for individual players in conformity to representations in a game.

An embodiment provides a network game system, a network game server, and an advertisement displaying method which can retrieve event information or advertisement information in conformity to personal information of a player (hereinafter, "player" may be referred to as "user") operating a game terminal from a database connected to a network game server, and display thus retrieved information into a game screen.

According to an embodiment, in a network game server to which user identification information is transmitted from a game terminal, personal utilization history information related to the user identification information is extracted, and an event information item associated with the personal utilization history information is transmitted to the game terminal. Using this event information item, the game terminal generates a game screen. Therefore, the event information item corresponding to the utilization history of shops or network shopping by a player can be displayed within a game screen of a game executed by the game terminal. The event information item can include advertisement information in shops or network shopping used by the user, for example. Namely, in conformity to representations during a game, different advertisements can be displayed for individual players. As a result, even when involved in the game for a long time, the players can acquire information conforming to their personal tastes while playing the game. On the other hand, managers of shops and network shopping can take advantage of advertisement effects in conformity to personal tastes, and so forth.

The game terminal comprises control means for executing a game program, the control means causing second transmitting means to transmit type discriminating data concerning a type of a game selected to the network game server; whereas the network game server comprises editing means for editing, according to the type discriminating data transmitted from the game terminal, event information item extracted by extracting means.

According to these aspects, even when there are a plural ity of type of games to be executed by the game terminal, an event information item edited so as to be suitable for a selected game is transmitted to the game terminal. Therefore, the event information item suitable for the game can be displayed on the game terminal. For example, the event information can be edited into text information used for conversations between characters if the game is an RPG game, into audio data so as not to obstruct the proceeding with the game in the case of a shooting game, or into image data for a promotional banner.

The database may store the event information items in association with the type discriminating data. The editing means can extract the event information items stored in the database in association with the type discriminating data transmitted by the game terminal.

In the network game server, the database may store the event information items in association with scene information for specifying a scene concerning a game image displayed by the game terminal according to the game program. The extracting means extracts the event information item and the scene information associated with the event information item. The first transmitting means transmits to the game terminal the event information item and scene information extracted by the extracting means. In the game terminal, the second receiving means receives the event information item and scene information transmitted from the network game server. The storage means stores, in association with the scene information received by the second receiving means, the event information item received together with the scene information. The control means outputs game screen information for specifying a game screen to be displayed to the image display means according to the game program; whereas the drawing means selects the event information item stored in the storage means according to the scene information concerning the game image specified by the game screen information outputted by the control means, and generates the game screen by using the event information item.

In this configuration, since the event information items are associated with scene information, the event information item suitable for a scene of a game image shown according to game programming can be displayed on the game terminal.

Embodiments of the present invention will be more fully understood from the detailed description given hereinbelow and the attached drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

### BRIEF DESCRIPTION OF THE DRAWINGS

In the course of the following detailed description, reference will be made to the attached drawings in which:
Fig. 1 is a schematic view of a network game system according to an embodiment of the present invention;
Fig. 2 is a diagram showing a circuit configuration of a control circuit of a network game server;
Fig. 3 is a perspective view of a game terminal;
Fig. 4 is a diagram showing a circuit configuration in which a main control circuit controlling the game terminal and peripheral devices electrically connected thereto are included;
Fig. 5 is a diagram showing a circuit configuration in which a auxiliary control circuit controlling an image display device and the like in the game terminal and peripheral devices electrically connected thereto are included;
Fig. 6 is a schematic view showing a concept of an image data arrangement in a video RAM of a auxiliary control device;
Fig. 7 is a schematic view showing the network game system in accordance with another embodiment of the present invention;
Fig. 8 is a diagram showing the circuit configuration of a control circuit for controlling a POS server;
Fig. 9 is a diagram showing a circuit configuration including a main control circuit for controlling a POS terminal, and peripherals electrically connected to the control circuit;
Fig. 10 is a view showing an image display example in an image display device in a game terminal;
Fig. 11 is a view showing an example of image display in the image display device in the game terminal;
Fig. 12 is a view showing an example of image display in the image display device in the game terminal;
Fig. 13 is a view showing an example of image display in the image display device in the game terminal;
Fig. 14 is a chart concerning program subroutines executed in the game terminal and network game server;
Fig. 15 is a chart concerning program subroutines executed in the network game server and an external device;
Fig. 16 is a chart concerning program subroutines executed in the network game server, game terminal, POS server, and POS terminal;
Fig. 17 is a chart concerning program subroutines executed in the network game server, game terminal, POS server, and POS terminal;
Fig. 18 is a chart showing an example of a table concerning event information stored in a memory for image data;
Fig. 19 is a flowchart of a process concerning the selecting of an image;
Fig. 20 is a flowchart of a process concerning the making of an image;
Fig. 21 is a chart showing an example of storage format of personal utilization history information in the network game server;
Fig. 22 is a chart showing an example of storage format of event information in the network game server;
Fig. 23 is a chart showing an example of personal utilization history stored in the game terminal; and
Fig. 24 is a flowchart concerning an image making process.

### DESCRIPTION OF THE PREFERRED EMBODIMENTS

An embodiment of the present invention is described hereinbelow with reference to the drawings. Note that a game terminal of this embodiment is configured to be able to also serve mainly as an in-store terminal. The game terminal is not limited thereto, and may be any of an in-store terminal, an in-store video game machine, a home video game machine, a personal computer, a PDA, a cellular telephone and the like, as long as the terminal is capable of two-way communication by being connected to a network game server through a communication line, and is provided with an input device and an output device.

[Configuration of Entire System including Network Game Server As a Central Function]

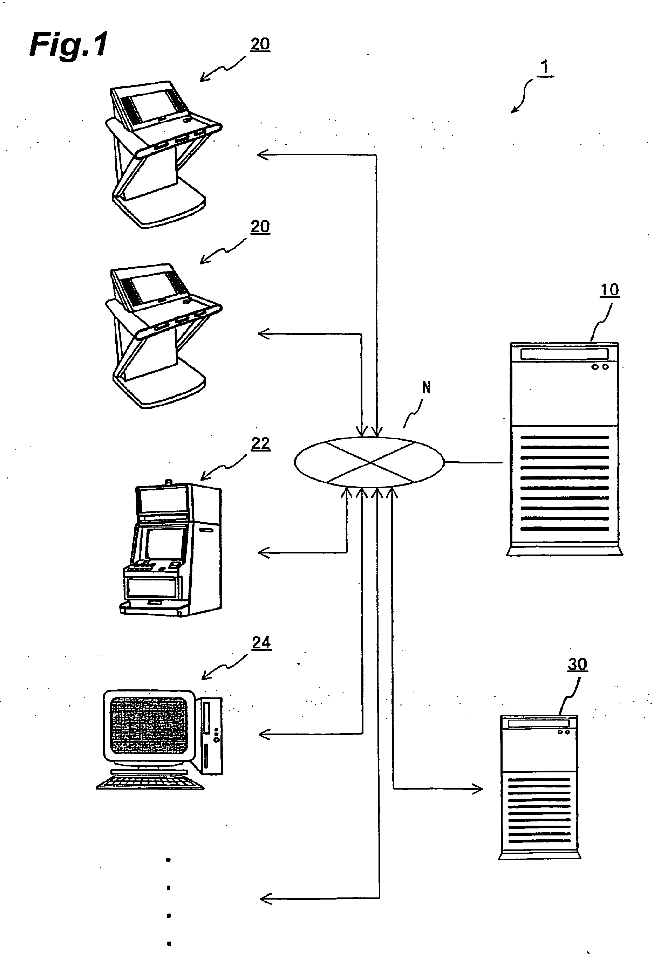

Fig. 1 is a schematic view of a network game system according to this embodiment. The network game system 1 includes a network game server 10, a plurality of game terminals 20, 22 and 24, each serving as a game terminal, and an external device 30 provided in addition to the game terminals 20, 22 and 24. The network game server 10, the plurality of game terminals 20, 22 and 24, and the external device 30 are connected to one another through communication lines.

The game terminal 20 is the game terminal installed in a game arcade or the like, and can be also used as an in-store terminal which is installed in a shop such as a convenience store which users can easily drop into. The game terminal 22 is a general game machine installed in a place of amusement. The game terminal 24 is a personal computer. Apart from the above game terminals, a cellular phone, a PDA, a home video game machine and the like can be used as the game terminal of the embodiment. The game terminal 20 and the like are configured to be able to transmit/receive various kinds of information to/from the network game server 10.

The game terminal 20 is explained as an example hereinbelow, but the game terminals 22 and 24 are also enabled to realize the similar function to that of the game terminal 20 described below. Note that the function of the game terminal of the embodiment may be realized by any other terminal.

The network game server 10 is also connected to the external device 30 through a network of communication lines. The external device 30 uses information accumulated in the network game server 10.

The network game server 10 manages information inputted in the plurality of game terminals 20. Each game terminals 20 is provided with its own identification number. According to the identification number, the network game server 10 determines the game terminal 20 from which data is transmitted.

### [Configuration of Network Game Server]

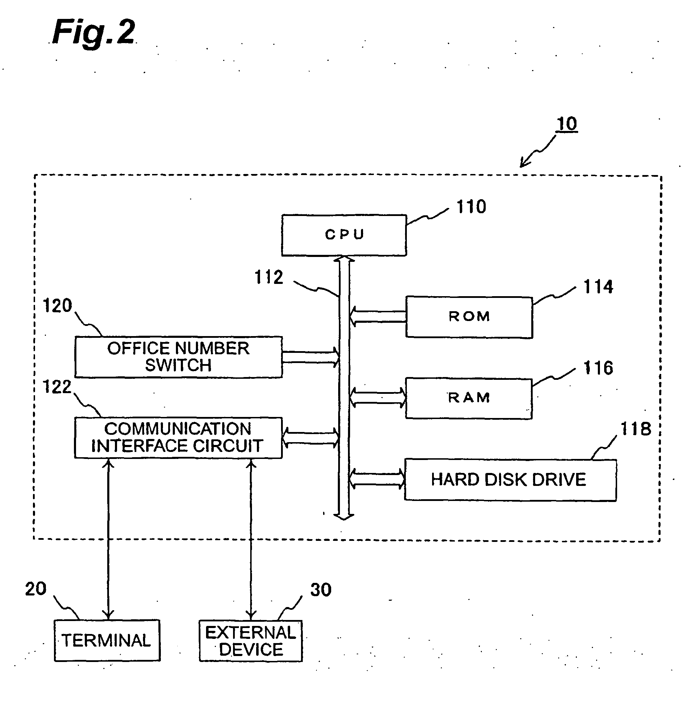

Fig. 2 is a diagram showing a configuration of a control circuit of the network game server.

The network game server 10 has a central processing unit (hereinafter, referred to as a CPU) 110. The CPU 110 is connected to an I/O bus 112. The control circuit is configured so that a data signal or an address signal is fed into/from the CPU 110. A read only memory (ROM) 114 and a random access memory (RAM) 116 are also connected to the I/O bus 112. In the ROM 114, a control program is stored which controls the later-described network game server 10. The RAM 116 stores therein flags, values of variables and the like that are used in the above-mentioned program.

A hard disk drive 118 is also connected to the I/O bus 112. In the hard disk drive 118, a database is constructed. In this database, personal information containing plurality of items inputted by players through the terminals 20, ID codes corresponding to the personal information and the like are accumulated. By using the ID code received from the network game server 10, the external device 30 can search the database and retrieve the personal information corresponding to the ID code from the network game server 10.

Note that a storage device for storing a game program and the like may be any devices as long as it is a nonvolatile rewritable storage device with a large capacity, such as a flash memory.

An office number switch 120 and a communication interface circuit 122 are also connected to the I/O bus 122. As shown in Fig. 1, the communication interface circuit 112 is communicably connected to the plurality of game terminals 20 and the external device 30 through communication lines such as public switchedtelephonenetwork, local area network (LAN) or the like. The office number switch 120 sets office numbers in these communications.

Note that, in this embodiment, both the plurality of game terminals 20 and the external device 30 are connected to the network game server 10 through the communication interface circuit 122. However, the present invention is not limited thereto. The plurality of game terminals 20 and the external device 30 can be connected to the network game server 10 via different communication interface circuits, respectively. For example, the pluralityof game terminals 20 maybe connected to the network game server 10 via dedicated lines, and the external device 30 may be connected to the same via a public line.

### [Configuration of Game Terminal]

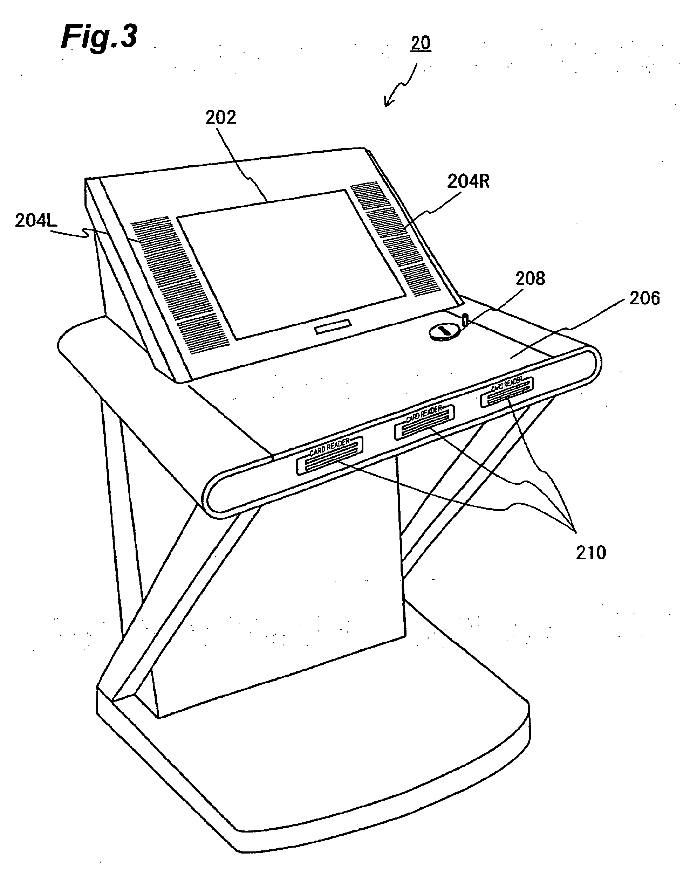

Fig. 3 is a perspective view of the game terminal 20. The upper portion of the game terminal 20 inclines rearward with respect to a perpendicular direction based on a state shown in Fig. 3. At the center of a plane face inclined as mentioned above, an image display device 202 is provided. The image display device 202 can display various kinds of information such as game information in a game. The game proceeds on the display.

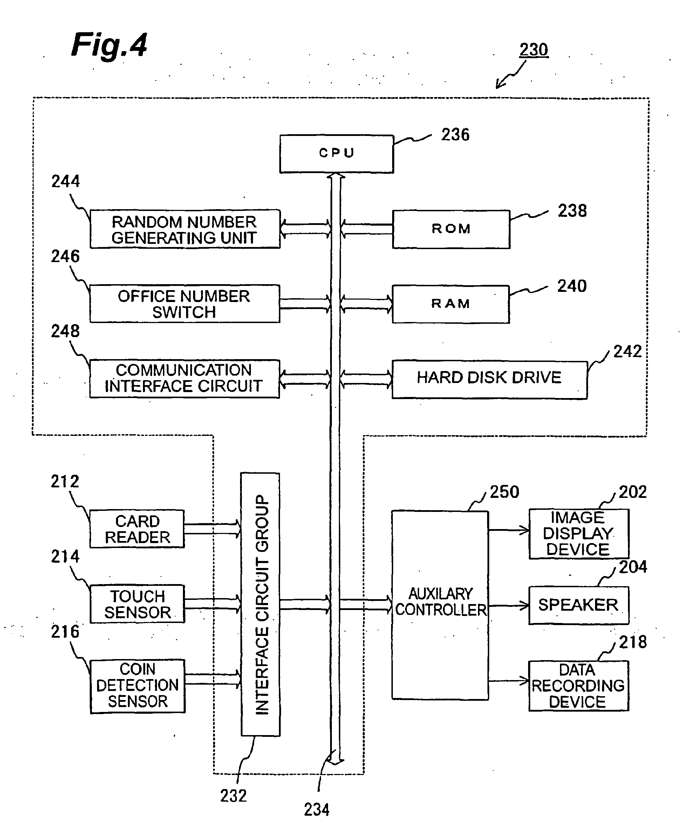

In the image display device 202, a touch sensor 214 (see Fig. 4) is provided. Operations on the image display device 202 during the game and input of various kinds of data are carried out through the touch sensor 214.

On the left and right sides of the image display device 202, speakers 204 (204L and 204R) are provided. The speakers 204 (204L and 204R) produce sounds corresponding to images displayed on the image display device 202 and notification sounds for a user of the terminal.

Underneath the image display device 202, a pedestal 206 is provided. The pedestal 206 protrudes frontward of the game terminal 20 and has a hori zontal plane. On the right side on the top surface of the pedestal 206, a coin insertion slot 208 is provided. The user of the terminal drops a coin, a token or the like into the coin slot 208 so that apay service is available at the game terminal 20.

On the front face of the pedestal 206, a card insertion slots 210 are provided, into which an information card storing various kinds of information is inserted by the user of the terminal. A card reader 212 (see Fig. 4) and a data recording device 218 (see Fig. 4) read the various kinds of information into the game terminal 20 from the information card inserted from the card insertion slot 210, or write data into the information card.

### [Configuration of Control Device of Game Terminal]

Fig. 4 is a diagram showing a circuit configuration including a main control circuit which controls the game terminal 20 and peripheral devices electrically connected to the main control circuit.

The card reader 212 provided at the back of the card insertion slot 210 and the touch sensor 214 provided in the image display device 202 are connected to an interface circuit group 232 of the main control circuit 230. The interface circuit group 232 is connected to an I/O bus 234. When the information card is inserted or the touch sensor 214 is touched, the card reader 212 or the touch sensor 214 generates a predetermined signal. The generated signal is supplied to the I/O bus 234. The I/O bus 234 is configured so that a data signal or an address signal is fed into/from a CPU 236.

Note that the game terminal 20 of this embodiment is provided with, but not limited to, the touch sensor 214 for the player to input various kinds of information. The game terminal 20 may be provided with an operation unit such as a keyboard or a command switch. In other words, any kind of game terminal 20 is applied as long as it is provided with an input device which can generate an input signal that reflects the player's intention.

A coin detection sensor 216 is also connected to the interface circuit group 232. When coins are dropped into the foregoing coin insertion slot 208, the coin detection sensor 216 produces a signal related to a number of coins dropped thereinto and the supplies the signal to the interface circuit group 232.

A ROM 238 and a RAM 240 are also connected to the I/O bus 234. The ROM 238 stores a control program, which controls a flow of the entire system of the game terminal 20, and the like. The RAM 240 temporarily stores flags and values of variables used in a program such as the above-mentioned program, which is executed in the game terminal 20.

A hard disk drive 242 is also connected to the I/O bus 234. The hard disk drive 242 stores a program which is not stored in the RAM 240 and is received through the network game server or the like in order to be executed in the game terminal 20, data to be accumulated in the game terminal 20 over a long period of time, and the like.

Note that the storage device for storing the game program and the like may be any devices as long as it is a nonvolatile rewritable storage device with a large capacity, such as a flash memory.

Arandomnumber generating unit 244 is connected to the I/O bus 234. The random number generating unit 244 is for generating random numbers used in the program executed in the terminal 20. When an instruction for generating random numbers is sent from the CPU 236 to the random number generating unit 244, the random number generating unit 244 generates random numbers in a predetermined range, and transmits a signal which indicates the value of the random numbers to the I/O bus 234. The CPU 236 determines a progress of the program based on the transmitted random numbers. The random numbers transmitted from the random number generating unit 244 is stored in the RAM 240 as data indicating the result of drawing.

An office number switch 246 is also connected to the aforementioned interface circuit group 232. As shown in Fig. 1, the office number switch 246 is communicatively connected to the network game server 10 through communication lines such as the public switched telephone network, LAN or the like and sets the office number in the communication therebetween. Thus, the plurality of game terminals 20 are respectively identified by the network game server 10.

A communication interface circuit 248 is also connected to the I/O bus 234. The communication interface circuit 248 is for communicating with the network game server through communication lines such as the public switched telephone network, LAN or the like.

A auxiliary controller 250 is also connected to the I/O bus 234. Based on an instruction transmitted from the primary control circuit 230, the auxiliary controller 250 produces driving signals for driving the image display device 202, the speakers 204 and the data recording device 218 which are connected to the auxiliary controller 250.

### [Configuration of Auxiliary Controller of Game Terminal]

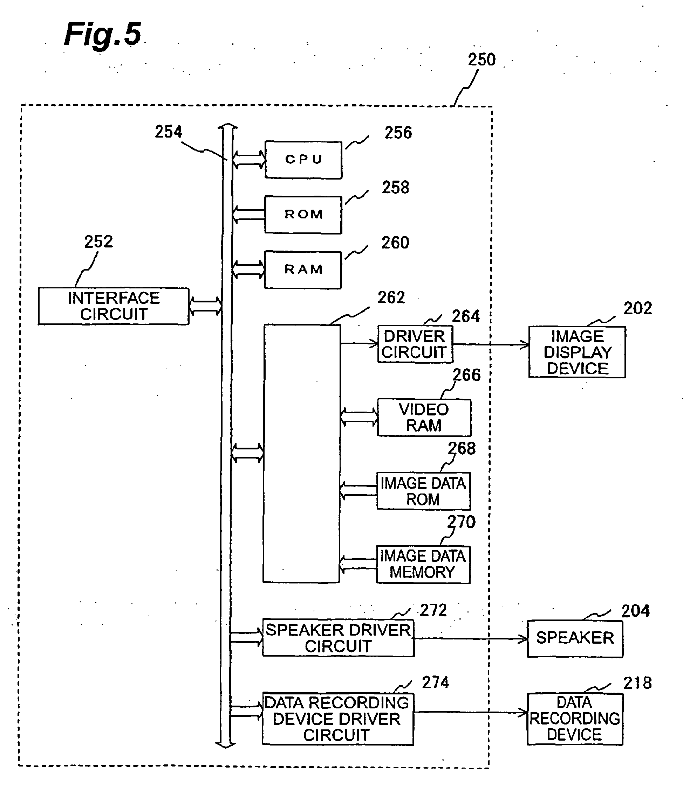

Fig. 5 is a diagram showing a circuit configuration in which an auxiliary controller controlling an image display device and the like in the terminal and peripheral devices electrically connected thereto are included.

An interface circuit 252 is connected to an I/O bus 254. An instruction transmitted from the primary control circuit 230 is supplied to the I/O bus 254 through the interface circuit 252. The I/O bus 254 is configured so that a data signal or an address signal is fed into/from a CPU 256.

A ROM 258 and a RAM 260 are also connected to the I/O bus 254. The ROM 258 stores an output information control program for generating the driving signals supplied to the image display device 202, the speakers 204, and the data recording device 218 based on the instruction transmitted from the primary control circuit 230. The RAM 260 stores flags and values of variables used in the program.

A video data processor (hereinafter, referred to as a VDP) 262 is also connected to the I/O bus 254. The VDP 262 includes circuits such as a so-called sprite circuit, a screen circuit, a pallet circuit and the like. The VDP 262 is a processor which can perform various processing for displaying images on the image display device 202.

A driver circuit 264 which generates a driving signal for driving the image display device 202 is connected to the VDP 262. A video RAM 266, an image data ROM 268 and an image data memory 270 are connected to the VDP 262. The video RAM 266 stores image data corresponding to image display instructions transmitted from the primary control circuit 230. The image data ROM 268 stores image data including background image data, pattern image data, character image data and the like. The image data memory 270 stores newly added image data.

The CPU 256 reads out and then executes a display control program stored in the ROM 258. Based on the image display instructions transmitted from the main control circuit 230, the CPU 256 causes the video RAM 266 to store image data to be displayed on the image display device 202. The image display instructions transmitted from the main control circuit 230 include instructions for displaying a background, a pattern, a character and the like.

The image data ROM 268 and the image data memory 270 store personal information input image information and image data such as the character image data of a character such as a moving object and the like displayed as a presentation image and background image data configuring a background of the image display device 202 or the like. The character image data mentioned above includes image data required for displaying a character which performs a series of actions.

A speaker driver circuit 272 is also connected to the I/O bus 254. Upon receipt of a driving instruction from the CPU 256, the speaker driver circuit 272 transmits a sound signal to the speakers 204. Thus, the speakers 204 produce predetermined sounds.

A data recording device driver circuit 274 is also connected to the I/O bus 254. Upon receipt of a driving instruction from the CPU 256, the data recording device driver circuit 274 transmits a signal to the data recording device 218. Thus, the data recording device 218 records data into the information card inserted into the card insertion slot 210. The data includes magnetic data, character data to be written on the surface of the card, image data and the like.

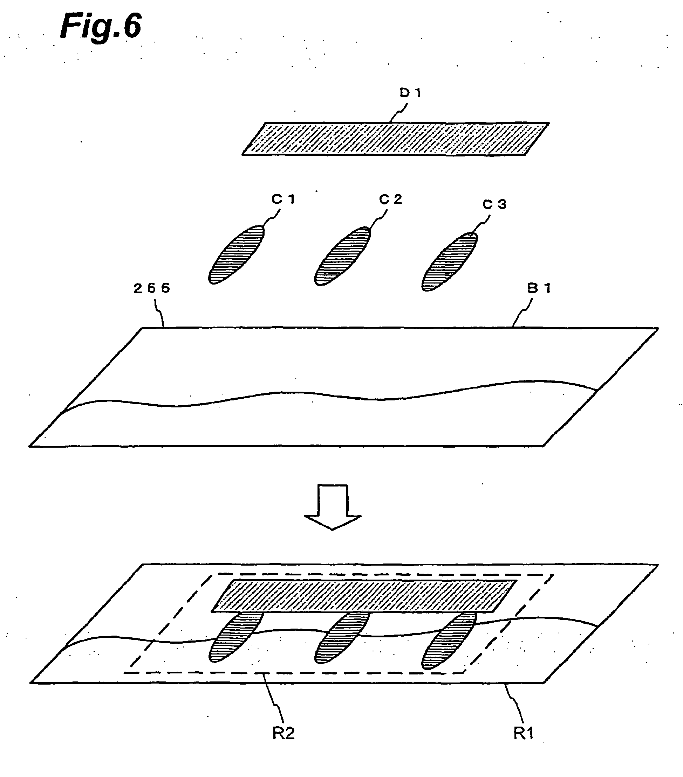

Fig. 6 is a schematic view showing a concept of an image data arrangement in the video RAM of the auxiliary controller. As shown in Fig. 6, a size of image data generated in the video RAM 266 in accordance with a screen display instruction (hereinafter, referred to as a screen image region R1) is set to be larger than a display region R2 displayed on the image display device 202. In Fig. 6, the screen image region R1 is surrounded by a solid line and the display region R2 is surrounded by a broken line. By setting these regions as above, smooth scrolling display of an image to be displayed on the image display device 202 can be realized.

When the instruction for displaying the personal information input image is transmitted from the main control circuit 230, the VDP 262 reads out image data of an image D1 showing the personal information input image from the image data ROM 268 or the image data memory 270. The VDP 262 arranges the read image data at a position in the video RAM 266, which corresponds to a position where the image should be displayed in the image display device 202.

When an instruction for displaying the characters is transmitted from the main control circuit 230, the VDP 262 reads out image data of each of character images C1 to C3 from the image data ROM 268. The VDP 262 arranges the read image data at positions in the video RAM 266, which correspond to positions where the character images should be displayed in the image display device 202.

When an instruction for displaying the background is transmitted from the main control circuit 230, the VDP 262 reads out image data of a background image B1 from the image data ROM 268. The VDP 262 arranges the read image data at a position in the video RAM 266, which corresponds to a position where the background image should be displayed in the image display device 202.

After generating the image data in the video RAM 266, the VDP 262 reads out only the image data which is stored in the display region R2 from the video RAM 266, and supplies the read image data to the driver circuit 264 as display signals. The image is displayed by each frame and a position where the image is displayed is changed, thereby adding movements to the characters and the like.

### [Configuration of System Composed of Network Game Server, Game Terminal, POS Server, and POS Terminal]

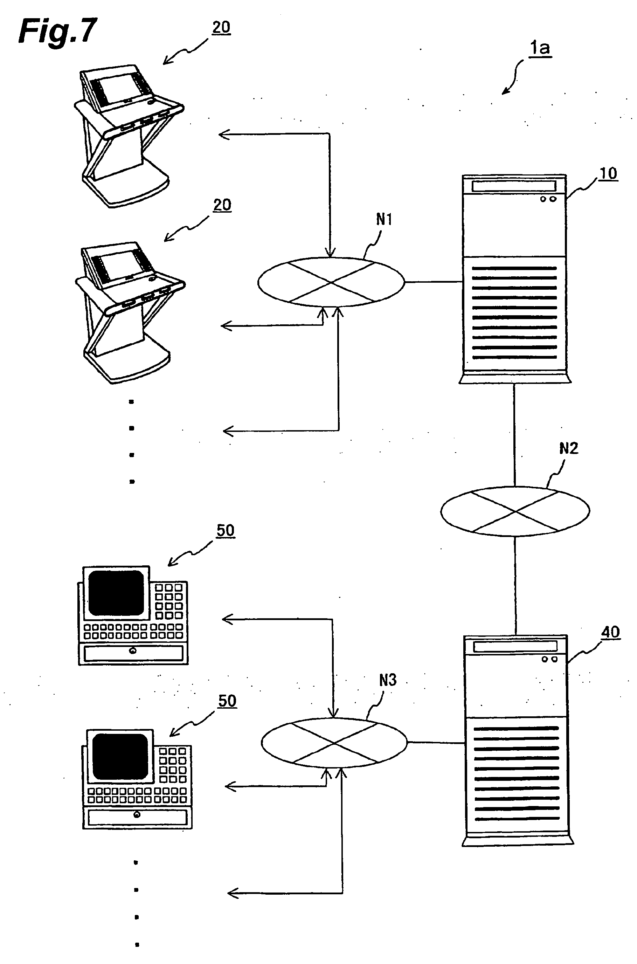

Fig. 7 is a schematic view showing the network game system in accordance with another embodiment of the present invention. The network game system 1a shown in Fig. 7 includes a network game server 10, a plurality of game terminals 20, a POS server 40, and a plurality of POS terminals 50.

As shown in Fig. 7, the network game server 10 is connected to the plurality of game terminals 20 via a network constituted by communication lines. By way of this network, the network game server 10 and the game terminals 20 can transmit and receive various kinds of information.

The network game server 10 is connected to the POS server 40 via a network constituted by communication lines. By way of this network, the network game server 10 and the POS server 40 can transmit and receive various kinds of information.

The POS server 40 is connected to the POS terminals 50 via a network constituted by communication lines. Byway of this network, the POS server 40 and the POS terminals 50 can transmit and receive various kinds of information.

The POS server 40 manages information inputted at a plurality of POS terminals 50. Each POS terminal 50 is provided with its own identification number. According to the identification number, the POS server 40 determines the POS terminal 50 from which data is transmitted.

### [Configuration of POS Server]

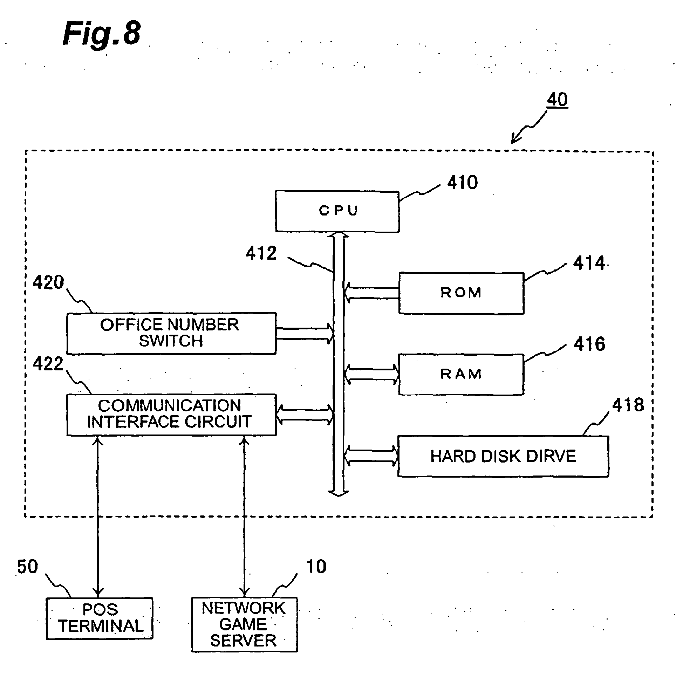

Fig. 8 is a diagram showing the circuit configuration of a control circuit for controlling the POS server 40. The POS server 40 comprises a central processing circuit (hereinafter referred to as CPU) 410. The CPU 410 is connected to an I/O bus 412, so that data signals or address signals are fed into/from the CPU 410.

Also connected to the I/O bus 412 are a ROM 414 and a RAM 416. The ROM 414 stores therein a control program for controlling the POS server 40, which will be explained later. The RAM 416 stores therein flags, values of variables, and the like used in the above-mentioned program.

Also connected to the I/O bus 412 is a hard disk drive 418. In the hard disk drive 418, a database accumulating history information concerning utilization of shops and ID codes of terminal users in the POS terminals 50 and the like are constructed.

Without being restricted to the hard disk drive 418, any storage device can be used as the storage device for constructing the database and the like as long as it is a large-capacity, nonvolatile, rewritable storage device such as flash memory.

Also connected to the I/O bus 412 is an office number switch 420 and a communication interface circuit 422. The communication interface circuit 422 is communicably connected to a plurality of POS terminals 50 and the network game server 10 via communication lines such as public switched telephone network and LAN as shown in Fig. 7. The office number switch 420 sets office numbers in these communications.

Though both the plurality of POS terminals 50 and the network game server 10 are connected via the communication interface circuit 422 in this embodiment, the present invention is not limited thereto. Different communication interface circuits may be provided for connecting with the plurality of POS terminals 50 and with the network game server 10. For example, dedicated lines may connect with a plurality of POS 50, while a public line may connect with the network game server 10.

### [Configuration of Controller for POS Terminal]

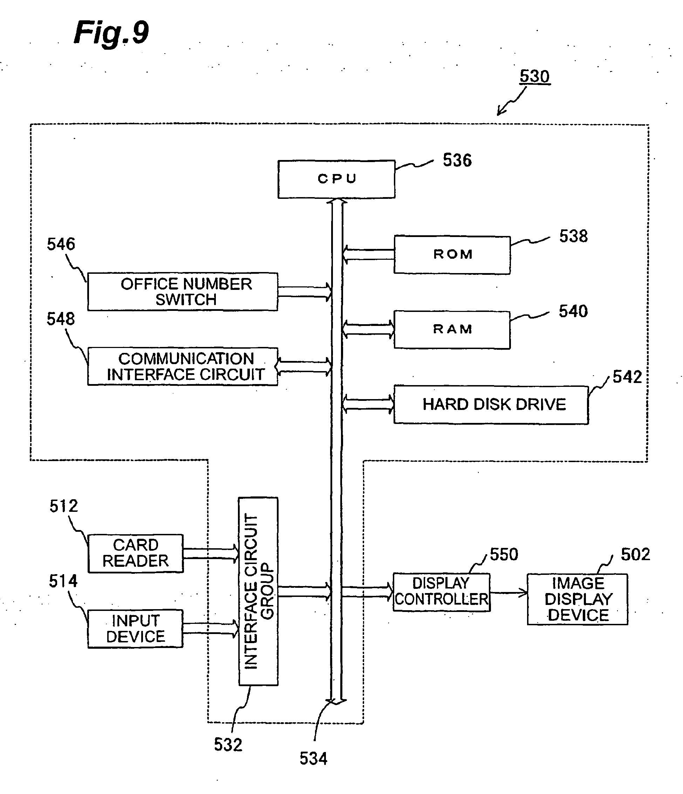

Fig. 9 is a diagram showing a circuit configuration including a main control circuit for controlling a POS terminal 50, and peripherals electrically connected to the main control circuit.

A card reader 512 and an input device 514 are connected to an interface circuit group 532 of a main control circuit 530. The interface circuit group 532 is connected to an I/O bus 534. When an information card is inserted into the card reader 512 or the input device 514 is operated, the card reader 512 and input device 514 generate respective predetermined signals. Thus generated signals are supplied to the I/O bus 534. The I/O bus 534 is configured such that data signals or address signals are fed into/from a CPU 536.

Also connected to the I/O bus 534 are a ROM 538 and a RAM 540. The ROM 538 stores a control program for controlling the flow of the whole system of the POS terminal 50, etc. The RAM 540 temporarily stores flags and values of variables used in programs executed in the POS terminal 50 such as the program mentioned above.

Also connected to the I/O bus 534 is a hard disk drive 542. The hard disk drive 542 stores data to be accumulated in the POS terminal 50 for a long period of time, etc.

Though the hard disk drive 542 is used as a storage device in this embodiment, any storage device may be used as long as it is a large-capacity, nonvolatile, rewritable storage device such as flash memory.

Also connected to the interface circuit group 532 is an office number switch 546. The office number switch 546 is communicably connected to the POS server 40 via communication lines such as public switched telephone network and LAN as shown in Fig. 7, and sets an office number in these communications. As a consequence, each of the plurality of POS terminals 50 is identified by the POS server 40.

Also connected to the I/O bus 534 is a communication interface circuit 548. The communication interface circuit 548 is used for communicating with the POS server 40 via communication lines such as public switched telephone network and LAN.

Also connected to the I/O bus 534 is a display controller 550. According to an instruction sent from the main control circuit 530, the display controller 550 generates a driving signal for driving an image display device 502 connected to the display controller 550.

### [Image Display Examples in Game Terminal]

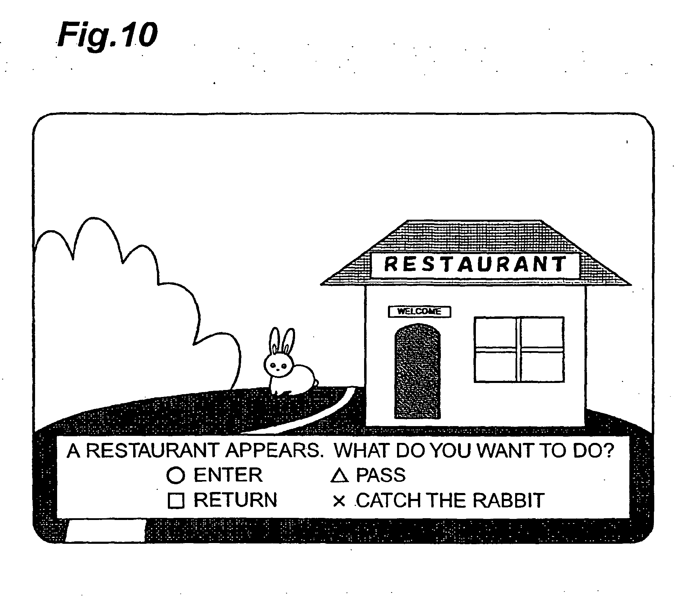

Figs. 10 to 13 are views showing image display examples in the image display device 202 of the game terminal 20.

Fig. 10 shows a display example in a state indicating options for selecting which actions to be taken by a main character controlled by a player during a game. In the example shown in Fig. 10, the image display device 202 displays a screen in a state where a restaurant appears in front of the main character as seen through a field of view thereof. Also, in this screen, a rabbit is displayed beside the restaurant. On the lower part of the screen displayed by the image display device 202, four options are displayed together with a text which says, "A restaurant appears. What do you want to do?" Referring to this text information, the player can choose one of the four options, so as to decide on the next process. This display example is one in which an image is displayed on the terminal so that an input process is carried out when one of four command switches labeled as circle, triangle, square, and cross is pushed. When one of the four action patterns described after the respective symbols indicating the command switches is chosen, and its corresponding command switch is pushed, the input completes.

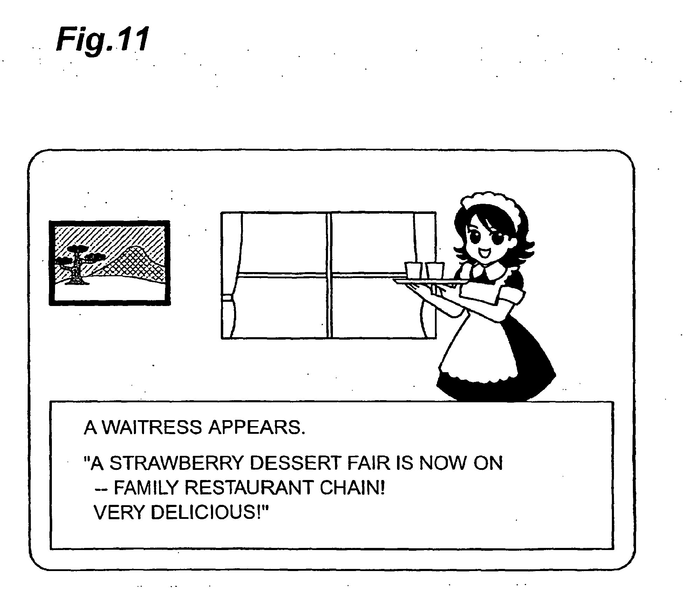

Fig. 11 shows an example of image display which appears after "Enter" labeled as circle is chosen among the four options in Fig. 10. In the display example shown in Fig. 11, when the main character enters the restaurant after the action to do so is chosen by the player, a waitress appears and advertises a family restaurant chain.

Image information related to such an advertisement has not been stored in a data table prepared together with the game program, but is received from the network game server 10 by the game terminal 20. This data is selected according to various kinds of information such as the time and date when the game is played, the location of the game terminal 20, and personal data of the player inputted in the game terminal 20. In the case where the location of the game terminal 20 and the location of a family restaurant chain coincide with each other while the personal data of the player includes information indicative of the fact that the player frequently uses a family restaurant, the image shown in Fig. 11 is generated when the current scene of the game is a restaurant. Namely, image information related to an advertisement conforming to this scene is chosen.

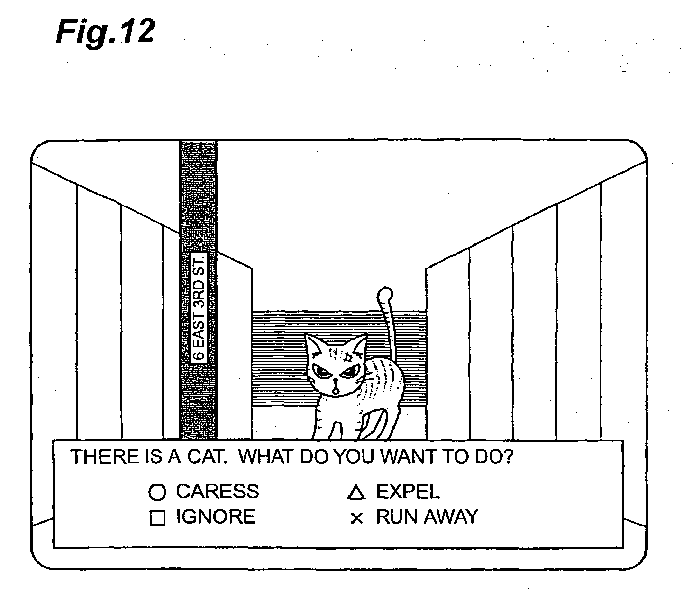

Fig. 12 shows another example of display in a state indicating options for selecting which actions to be taken by the main character controlled by the player during the game. In the example shown in Fig. 12, the image display device 202 displays a screen in a state where a cat appears in front of the main character as seen through a field of view thereof. On the lower part of the screen, four options are displayed together with a text which says, "There is a cat. What do you want to do?" Referring to this text information, the player can choose one of the four options, so as to decide on the next process.

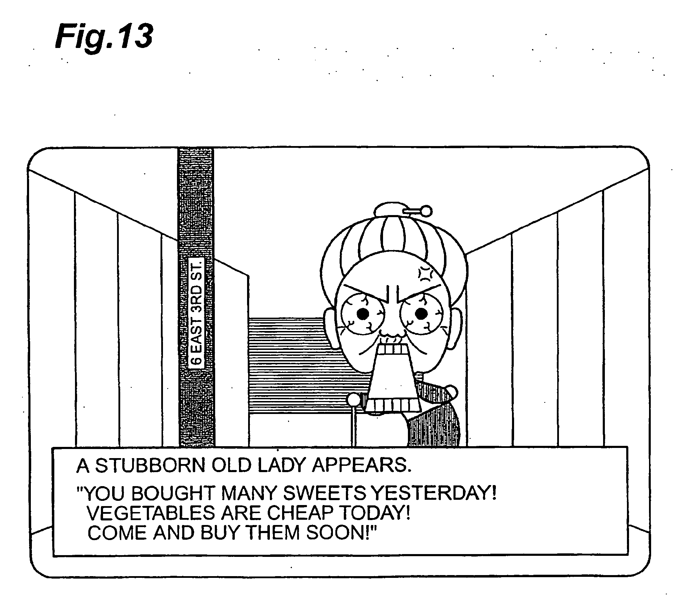

Fig. 13 shows an example of display in which, though the same scenery setting as that of Fig. 12, a "stubborn old lady" appears instead of the cat, while indicating information derived from the utilization history of a shop by the player. In this display example, information reported to the player alone is displayed in the form of speech of the "stubborn old lady" saying, "You bought many sweets yesterday! Vegetables are cheap today! Come and buy them soon!"

### [Event Information Display Process]

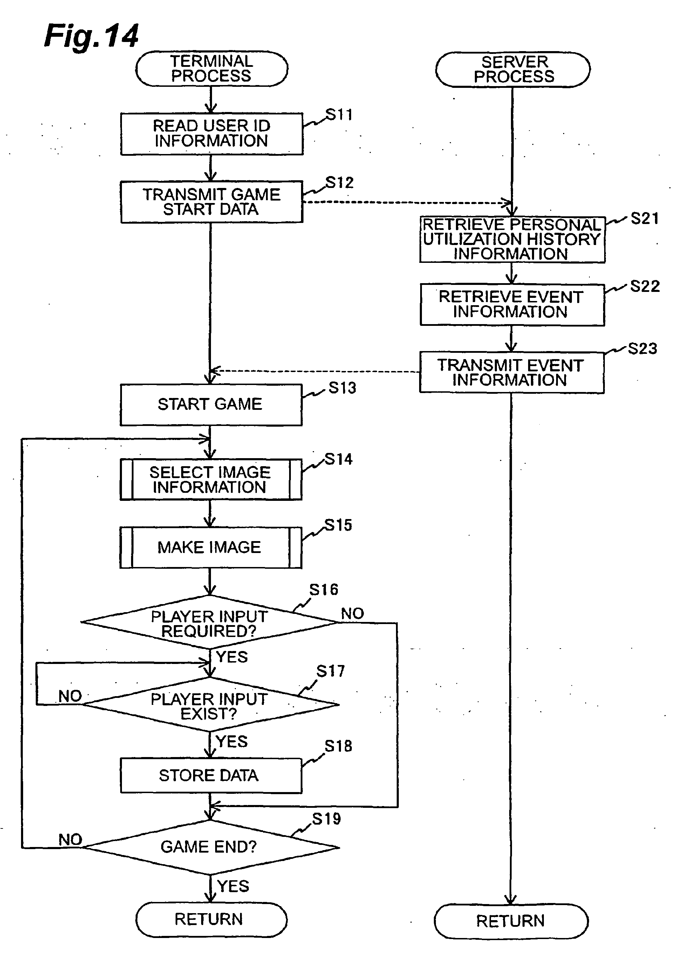

Fig. 14 is a chart concerning program subroutines executed in the game terminal 20 and network game server 10. In these subroutines, a process for displaying event information and advertisement information by screens such as those mentioned above is executed by the game terminal 20 and network game server 10.

The subroutines in Fig. 14 are executed after the player effects an input for starting a game with the game terminal 20 before the game ends.

In the game terminal 20, user identification information is initially read in the processing of step S11. In this processing, the CPU 236 reads the user identification information stored in the ID card of a player inserted into the card insertion slot 210. The user identification information may be inputted by the player instead of being read from the ID card. After this processing is completed, the flow shifts to step S12.

Subsequently, in the processing of step S12, user identification information is transmitted. In this processing, the CPU 236 transmits to the network game server 10 the user identification information read in the above-mentioned step S11. The game terminal 20 is equipped with a plurality of game programs, the player chooses one of the game programs, and type discriminating data related to the type of thus chosen program is also transmitted at this time. After this processing is completed, the flow shifts to step S13.

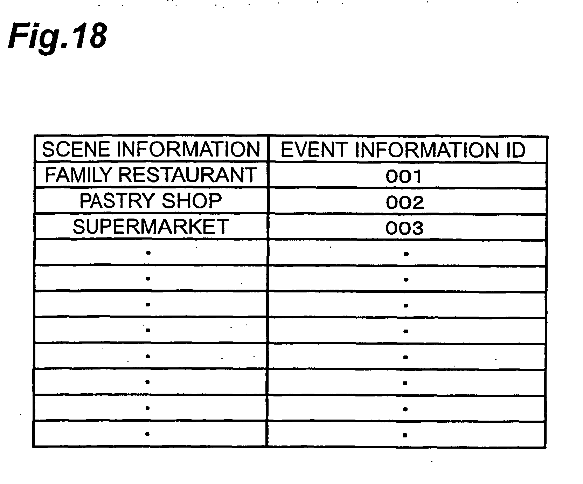

Subsequently, in the processing of step S13, the game is started. When the game begins, the CPU 236 receives event information and scene information from the network game server 10, and stores the event information and the scene information in relation to the event information into the image data memory 270. Fig. 18 is a chart showing an example of table concerning event information stored in the image data memory 270. The image data memory 270 stores event information IDs for specifying event information associated with scene information. Here, the scene information is information for specifying scenes in game images to be displayed by the image display device 202. The event information IDs are IDs for specifying event information items stored in the image data memory 270.

After event information and the like are stored in the image data memory 270, the CPU 236 reads the program concerning the game chosen by the player from the ROM 258 or hard disk 242, and executes the program. After this processing is completed, the flow shifts to step S14.

Subsequently, in the processing of step S14, image information is selected. In this processing, the CPU 236 orders the CPU 256 incorporated in the auxiliary controller to display an image conforming to the game program being executed. Inresponse to this order, the CPU256 causes the VDP 262 to choose appropriate image information. This image information is stored in the image data ROM 268 or the image data memory 270. Here, as mentioned above, type discriminating data is transmitted from the game terminal 20 to the network game server, so that event information corresponding to the type of game program can be stored in the image data memory 270. This sets event information as an assembly of image data variable depending on the type of game program being executed in the game terminal 20, whereby different kinds of event information can be displayed depending on type of games.

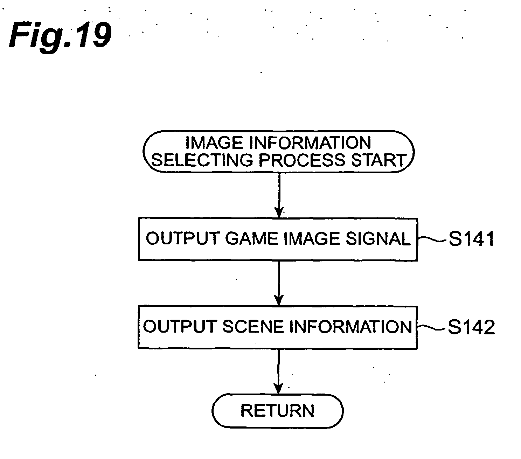

A process concerning the selecting of an image will now be explained more specifically. Fig. 19 is a flowchart of a process concerning the selecting of an image. As shown in Fig. 19, in step S141, the CPU 236 outputs to the CPU 256 a game image signal for specifying a game image stored in the image data ROM 268 or image data memory 270 according to the game program. In step S142, the CPU 236 outputs scene information for specifying a scene concerning this game image to the CPU 256. For example, when the game image to be displayed by the image display device 202 is a restaurant, information for specifying a restaurant is scene information. After this processing is completed, the flow shifts to step S15.

Subsequently, in the processing of step S15, an image is created. In this processing, the CPU 236 orders the CPU 256 to make an image by using the image information selected in step S14. In response to the order, the CPU 256 orders the VDP 262 to display this image information. As a consequence, an image is produced on the video RAM 266, and this image is displayed in the image display device 202. After the foregoing processing is completed, the flow shifts to step S16.

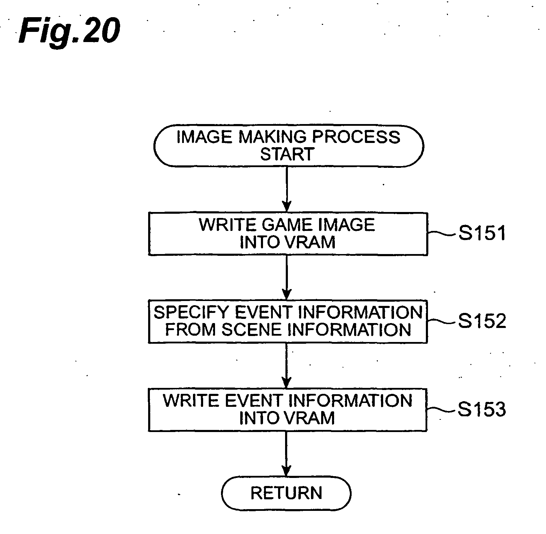

Aprocess concerning the making of an image will now be explained more specifically. Fig. 20 is a flowchart of a process concerning the making of an image. The CPU 256 outputs to the VDP 262 the game image signal and scene information outputted by the CPU 236. In step S151, according to the game image signal outputted from the CPU 256, the VDP 262 specifies a game image stored in the image data ROM 268 or image data memory 270, and produces an image onto the video RAM 2 66 by using the game image. Subsequently, in step S152, the VDP 262 specifies an event information ID stored in the image data memory 270 in association with the scene information outputted by the CPU 256. Also, according to the event information ID, the VDP 262 specifies event information stored in the image data ROM 268. Then, in step S153, the VDP 262 generates an image onto the video RAM 266 by using the event information specified in step S152.

Subsequently, in the processing of step S16, it is determined whether data input by a player is necessary or not. In this processing, the CPU 236 determines whether the image information displayed in step S15 requires the player to input data or not. If it is determined that the image information does not require the player to input data, then the CPU 236 shifts the flow to step S19. If it is determined that the image information requires the player to input data, the CPU 236 shifts the flow to step S17, since next image information cannot be displayed before data input.

Subsequently, in the processing of step S17, it is determined whether data is inputted from the player or not. In this processing, the CPU 236 determines whether data is inputted from the player by way of the touch sensor 214 or not in response to the requirement in the image information displayed in the above-mentioned step S15. If it is determined that no signal indicative of the data input is received from the touch sensor 214, the CPU 236 repeats this step. If it is determined that the signal indicative of the data input is received, on the other hand, the CPU 236 shifts the flow to step S18.

Though the game terminal 20 in this embodiment is one in which the touch sensor 214 attached to the image display device 202 allows the player to effect various kinds of input by touching the screen, operating parts such as keyboard and command switch may be used for input instead. Namely, it will be sufficient if the game terminal 20 is equipped with an operating part which can generate an input signal reflecting an intention of the player.

Subsequently, in the processing of step S18, the input data is stored. In this processing, the CPU 236 stores the input received in the above-mentioned step S17 into the RAM 240. Thus inputted data is accumulated as an item of personal information, and/or is used as data necessary for proceeding with the game. After the foregoing processing is completed, the flow shifts to step S19.

Subsequently, in the processing of step S19, it is determined whether the game is terminated or not. In this processing, the CPU 236 determines whether the executed game program is terminated or not. If it is determined that the game program is not terminated, the CPU 236 shifts the flow to step S14. If it is determined that the game program is terminated, on the other hand, the CPU 236 immediately ends this subroutine.

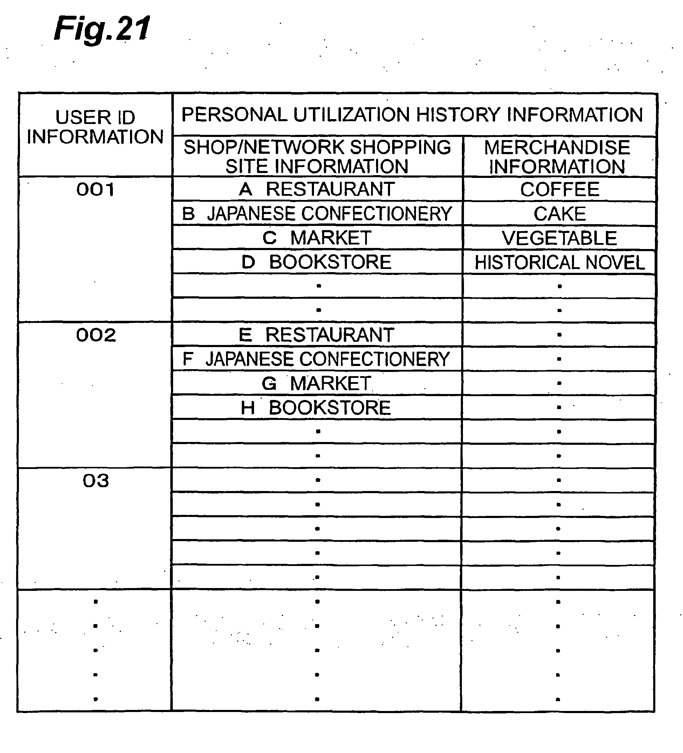

In the network game server 10, personal utilization information is initially retrieved in the processing of step S21. In this processing, from the database constructed in the hard disk drive 118, the CPU 110 retrieves personal utilization history information corresponding to the user identification information transmitted from the game terminal 20. Fig. 21 is a chart showing an example of storage format of personal utilization history information in the network game server 10. The database constructed in the hard disk drive 118 stores personal utilization history information in relation to user identification information. In an example shown in Fig. 21, personal utilization history information includes shop/network shopping site information and merchandise information. The shop/network shopping site information is information for specifying shops or network shopping sites used by users, whereas the merchandise information is information for specifying merchandises (or services) purchased by the users. When the personal utilization history is stored as shown in Fig. 21 while the user identification information transmitted from the game terminal 20 is "001", the CPU 110 retrieves personal utilization history information items associated with the user identification information "001". After this processing is completed, the flow shifts to step S22.

Subsequently, in the processing of step S22, event information is retrieved. In this processing, according to the personal utilization history information retrieved in the above-mentioned step S21, the CPU 110 retrieves event information appropriate for being displayed on the game screen from the database constructed in the hard disk drive 118. Information concerning the type of game program chosen by the player is also received in step S12, and the retrieval is carried out in view of this information as well.

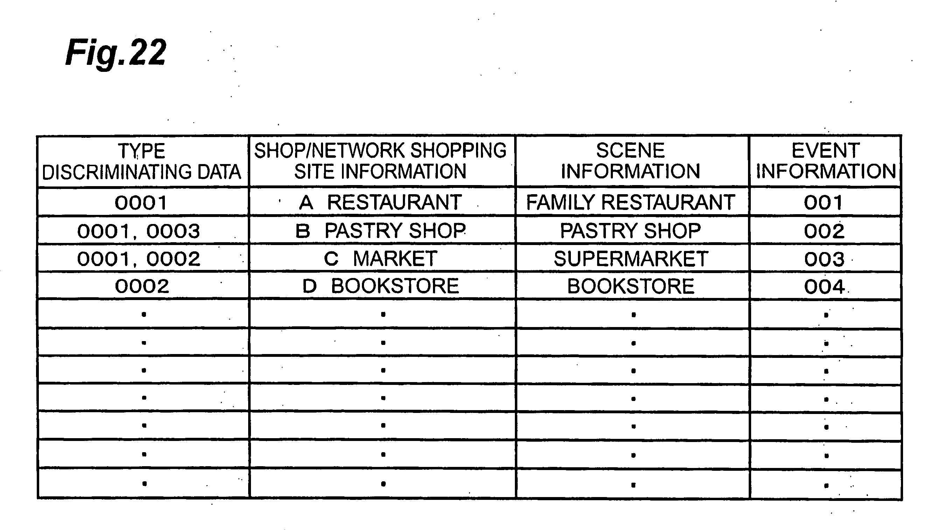

A process concerning the retrieval of event information will now be explained more specifically. Fig. 22 is a chart showing an example of storage format of event information in the network game server. For example, as shown in Fig. 22, the database constructed in the hard disk drive 118 stores shop/network shopping site information, i.e., personal utilization history information, in association with the type discriminating data for specifying the type of game program. Also, this database stores scene information and event information in association with the type discriminating data and shop/network shopping site information. When the event information is stored as shown in Fig. 22, the CPU 110 extracts data associated with the type discriminating data transmitted from the game terminal 20 from the above-mentioned database. From thus extracted data, the CPU 110 extracts the scene information and event information associated with the shop/network shopping site information included in the personal utilization history information retrieved in step S21. After this processing is completed, the flow shifts to step S23.

Subsequently, in the processing of step S23, event information is transmitted. In this processing, the CPU 110 transmits to the game terminal 20 the event information and scene information retrieved in the above-mentioned step S22. Immediately after this processing is completed, the subroutine is terminated.

### [Event Information Storing Process]

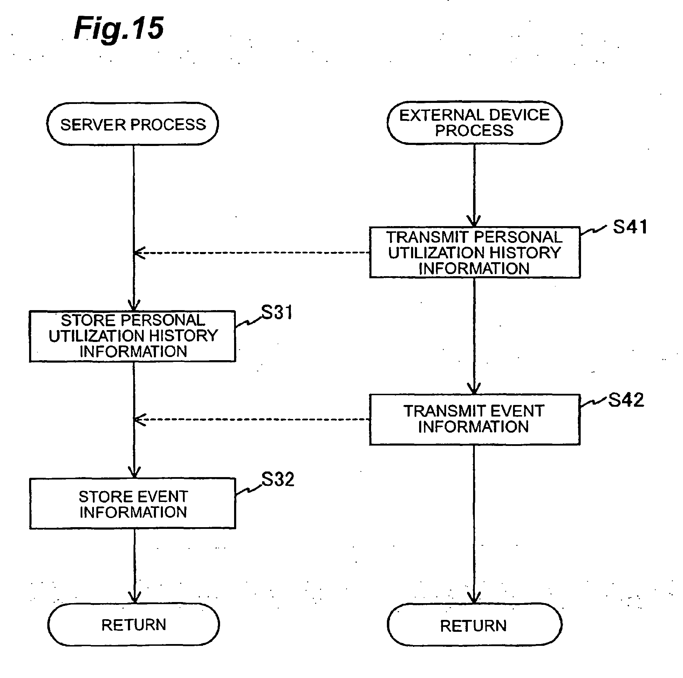

Subroutines executed by the network game server 10 and external device 30 in order to store the event information and personal utilization information into the database of the network game server 10 will now be explained. Fig. 15 is a chart concerning program subroutines executed by the network game server and external device.

In the network game server 10, personal utilization history information is initially stored in the processing of step S31. In this processing, the CPU 110 receives the personal utilization history information transmitted from the external device 30, and stores thus received personal utilization history information at a predetermined position of the hard disk drive 118. After this processing is completed, the flow shifts to step S32.

Subsequently, in the processing of step S32, event information is stored. In this processing, the CPU 110 receives the event information transmitted from the external device 30, and stores thus received event information at a predetermined position of the hard disk drive 118. Immediately after this processing is completed, the subroutine is terminated.

In the external device 30, on the other hand, personal utilization history information is initially transmitted in the processing of step S41. In this processing, a CPU incorporated in the external device 30 transmits the personal utilization history information to the network game server. After this processing is completed, the flow shifts to step S42.

Subsequently, in the processing of step S42, event information is transmitted. In this processing, the CPU incorporated in the external device 30 transmits the event information to the network game server. Immediately after this processing is completed, the subroutine is terminated.

When the above-mentioned processes of steps S11 to S19, steps S21 to S23, steps S31 to S32, and steps S41 to S42 are executed, event information including advertisement information of a plurality of shops or network shopping sites corresponding to personal utilization history information of the shops or network shopping sites is displayed in the game screen of a game executed in a game terminal. Therefore, even when involved in the game for a long time, the player can obtain information in the real world suiting the personal taste thereof while playing the game. On the other hand, managers of shops and network shopping can provide effective advertisements corresponding to personal tastes.

Even when a plurality of type of games are executable in a game terminal, event information edited so as to suit these games is transmitted to the game terminal when the processes of steps S12 to S15 are executed. For example, the event information can be edited into text information used for conversations between characters if the game is an RPG game, into audio data so as not to obstruct the proceeding with the game in the case of a shooting game, or into image data for a promotional banner. Also, since scene information and event information are associated with each other, event information items suiting individual scenes of game images can be displayed. In the game scene of a restaurant shown in Fig. 11, for example, event information concerning a restaurant can be displayed.

### [Use of Shop Utilization History Information]

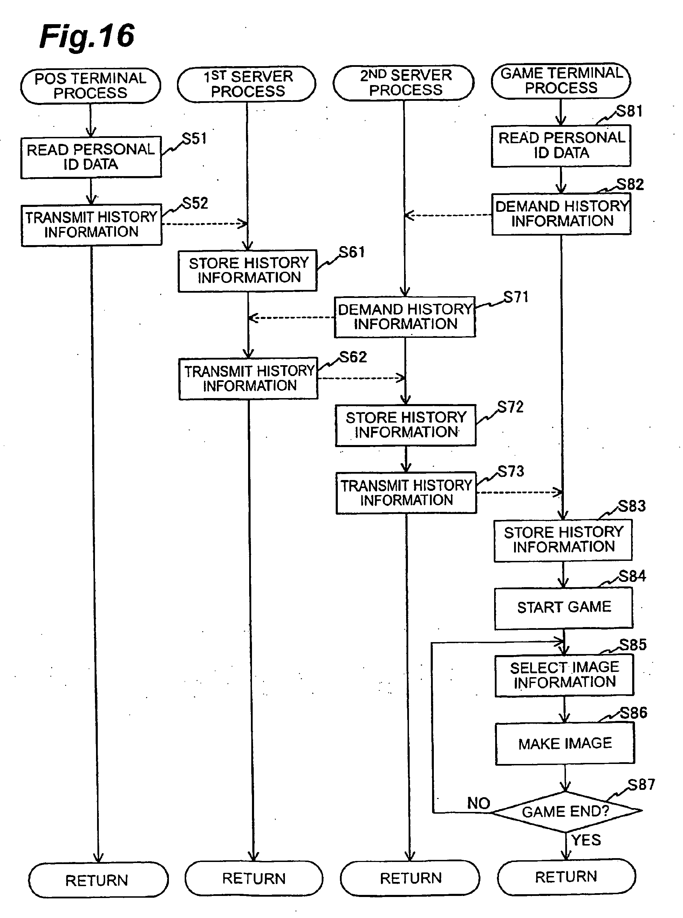

Respective subroutines executed in the POS terminal 50, POS server 40, network game server 10, and game terminal 20 executed in order for the game terminal 20 to use the history information stored in the POS terminal 50 will now be explained. Fig. 16 is a chart concerning respective program subroutines executed in the network game server (second server), game terminal, POS server (first server), and POS terminal.

In the POS terminal 50, personal identification information is initially read in the processing of step S51. In this processing, the CPU 536 reads the personal identification information from the ID card of a terminal user passed through the card reader 512. Instead of reading the personal identification information from the ID card, the terminal user may input an ID code by using the input device 514. After the foregoing processing is completed, the flow shifts to step S52.

Subsequently, in the processing of step S52, personal utilization history is transmitted. In this processing, the CPU 536 transmits to the POS server 40 the personal utilization history information concerning utilization such as purchases in shops inputted in the POS terminal 50 together with the personal identification information read in the above-mentioned step S51. Here, the personal utilization history information can include shop/network shopping site information for specifying shops or network shopping sites and merchandise information for specifying merchandises (or services) as mentioned above, for example. Immediately after the foregoing processing is completed, this subroutine is terminated.

In the POS server 40, on the other hand, history information is initially stored in the processing of step S61. In this processing, the CPU 410 causes the hard disk drive 418 to store the history information transmitted from the POS terminal 50. More specifically, the hard disk drive 418 stores personal identification information and personal utilization history information transmitted together with the personal identification information. For example, in the format shown in Fig. 21, the personal identification information and personal utilization history information are stored in the hard disk drive 418. After this processing is completed, the flow shifts to step S62.

Subsequently, in the processing of step S62, personal utilization history information is transmitted. In this processing, from the database stored in the hard disk drive 418, the CPU 410 retrieves personal utilization history information corresponding to the personal utilization history information transmitted from the network game server 10. The CPU 410 transmits thus detected personal utilization history information to the network game server 10. Immediately after the foregoing processing is completed, this subroutine is terminated.

In the network game server 10, personal utilization history information is initially demanded in the processing of step S71. In this processing, the CPU 110 transmits to the POS server 40 the personal identification information transmitted from the game terminal 20 and a signal requesting a transmission of personal utilization history information corresponding to the personal identification information. After the foregoing processing is completed, the flow shifts to step S72.

Subsequently, in the processing of step S72, history information is stored. In this processing, the CPU 110 causes the hard disk drive 118 to store the personal utilization history information transmitted from the POS server 40. More specifically, the hard disk drive 118 stores the personal identification information and personal utilization history information in association with each other. For example, in the format shown in Fig. 21, the personal identification information and personal utilization history information are stored in the hard disk drive 118. After this processing is completed, the flow shifts to step S73.

Subsequently, in the processing of step S73, personal utilization history information is transmitted. In this processing, the CPU 110 transmits to the game terminal 20 the personal utilization history information stored in the hard disk drive 118 after being transmitted from the POS server 40. Immediately after the foregoing processing is completed, this subroutine is terminated.

Inthe game terminal 20, personal identification information is initially read in the processing of step S81. In this processing; the CPU 236 reads the personal identification information from the ID card of a player passed through the card reader 212. Instead of reading the personal identification information from the ID card, the player may input an ID code by using the touch sensor 214. After the foregoing processing is completed, the flow shifts to step S82.

Subsequently, in the processing of step S82, personal utilization history information is demanded. In this processing, the CPU 236 transmits to the network game server 10 the personal identification information inputted in the above-mentioned step S81 and a signal requesting a transmission of personal utilization history information corresponding to the personal identification information. After the foregoing processing is completed, the flow shifts to step S83.

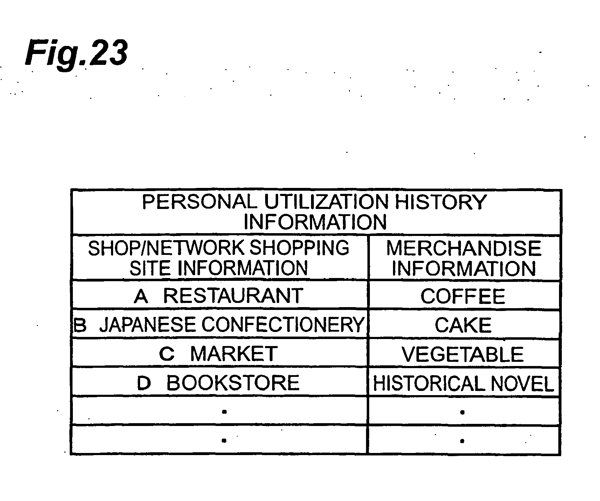

Subsequently, in the processing of step S83, personal utilization history information is stored. In this processing, the CPU 236 causes the hard disk drive 242 to store the personal utilization history information transmitted from the network game server 10. Fig. 23 is a chart showing an example of personal utilization history information stored in a game terminal. When the game terminal 20 transmits "001" as personal identification information to the network game server 10, for example, the personal utilization history information items associated with the user identification information "001" are transmitted from the network game server 10 to the game terminal 20. Then, as shown in Fig. 23, the CPU 236 causes the hard disk drive 242 to store the personal utilization history information transmitted from the network game server 10. After the foregoing processing is completed, the flow shifts to step S84.

Subsequently, in the processing of step S84, a game is started. In this processing, the CPU 236 reads a program concerning the game selected by the player from the ROM 258 or hard disk drive 242, and executes this program. After this processing is completed, the flow shifts to step S85.

Subsequently, in the processing of step S85, image information is selected. In this processing, the CPU 236 orders the CPU 256 incorporated in the auxiliary controller to display images in conformity to the game program being executed. In response to this order, the CPU 256 chooses appropriate image information in the VDP 262. For example, by way of the CPU 256, the CPU 236 outputs to the VDP 262 a game image signal for specifying a game image in conformity to the game program. This image information is stored in the image data ROM 268 or image data memory 270. New image data may be made according to the personal utilization history information stored in the hard disk drive 242, stored into the image data memory 270, and then used. After this processing is completed, the flow shifts to step S86.

Subsequently, in the processing of step S86, an image is made. In this processing, the CPU 236 orders the CPU 256 to make an image by using the image information selected in step S85. In response to this order, the CPU 256 orders the VDP 262 to display the image information. As a consequence, an image is produced on the video RAM 266 and is displayed in the image display device 202.

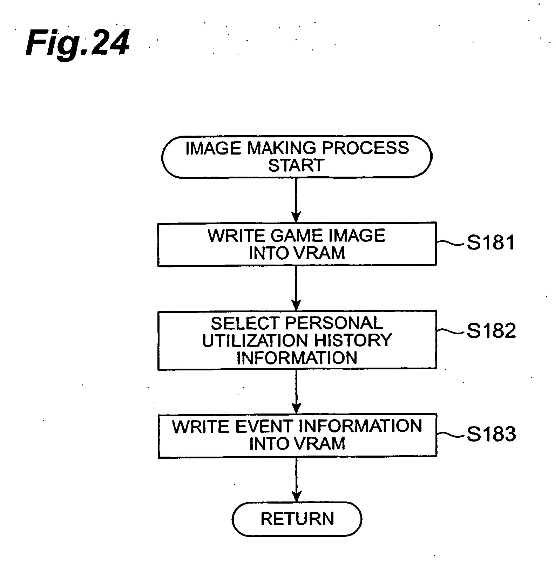

Aprocess concerning the making of an image will be explained more specifically. Fig. 24 is a flowchart concerning the image making process. In step S181 of this process, according to the game image signal outputted from the CPU 256, the VDP 262 initially specifies a game image stored in the image data ROM 268 or image data memory 270, and writes this game image into the video RAM 266.

Subsequently, in step S182, the CPU 236 selects personal utilization history information stored in the hard disk drive 242. For example, personal utilization history information items stored in the hard disk drive 242 are associated with respective flags, and the flags of already displayed personal utilization history information items are turned ON, whereby personal utilization history information items which have not been displayed can be selected.

Subsequently, in step S183, the CPU 236 orders the VDP 262 by way of the CPU 256 to write an image based on the selected personal utilization history information into the video RAM 266. Here, event information related to the personal utilization history information may be written into the video RAM and displayed in the image display device 202. In this case, personal utilization history information is stored as text data, and event information related to the personal utilization history information is acquired beforehand as text data from the network game server 10. Then, an image can be written into the video RAM 266 according to text data combining the personal utilization history information and event information together. This allows merchandises purchased by a person and event information in the shop to be displayed as a speech of a character in a game image according to personal utilization history information and event information, respectively, as shown in Fig. 12, for example. After the foregoing processing is completed, the flow shifts to step S87.

Subsequently, in the processing of step S87, it is determined whether the game ends or not. In this processing, the CPU 236 determines whether the game program executed is terminated or not. If it is determined that the game program is not terminated, the CPU 236 returns the flow to step S85. If it is determined that the game program is terminated, on the other hand, the CPU 236 immediately ends this subroutine.

In the above-mentioned processes of step S51 to S52, steps S61 to S62, steps S71 to S73, and steps S81 to S87, information corresponding to individual utilization histories of the first server (POS server) connected to a plurality of POS terminals is used in a game terminal, whereby the game itself can be provided with an originality.

### [Utilization of Play History Information]

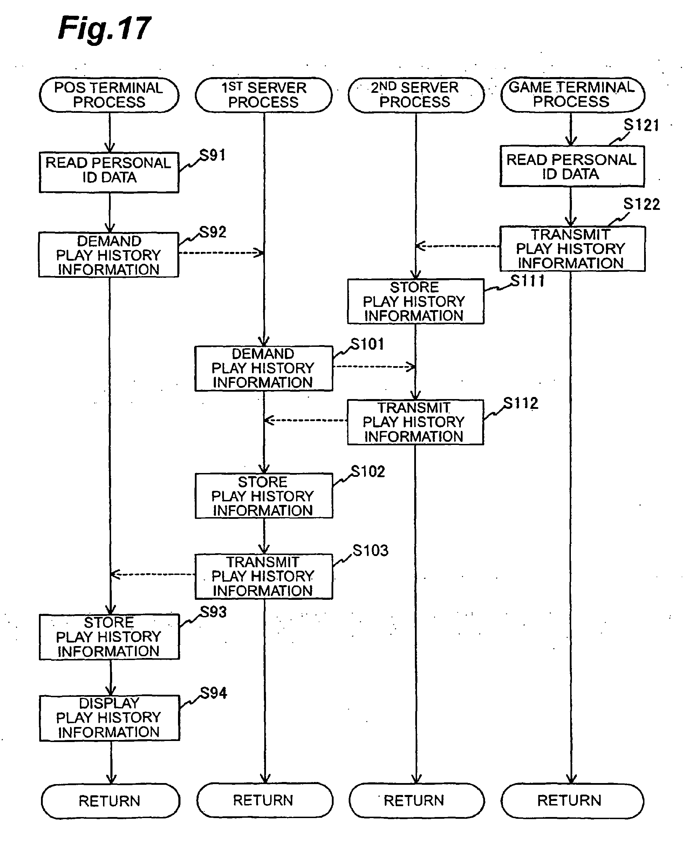

Respective subroutines executed in the POS terminal 50, POS server 40, network game server 10, and game terminal 20 in order for the POS terminal 50 to uti lize history information concerning plays stored in the game terminal 20 will now be explained. Fig. 17 is a chart concerning the program subroutines executed in the network game server, game terminal, POS server, and POS terminal.

In the POS terminal, personal identification information is initially read in the processing of step S91. In this processing, the CPU 536 reads the personal identification information from the ID card of a terminal user passed through the card reader 512. Instead of reading the personal identification information from the ID card, the terminal user may input an ID code by using the input device 514. After the foregoing processing is completed, the flow shifts to step S92.

Subsequently, in the processing of step S92, play history information is demanded. In this processing, the CPU 536 transmits to the POS server 40 the personal identification information inputted in the above-mentioned step S91 and a signal requesting a transmission of play history information corresponding to the personal identification information. After the foregoing processing is completed, the flow shifts to step S93.

Subsequently, in the processing of step S93, history information is stored. In this processing, the CPU 536 causes the hard disk drive 542 to store the play history information transmitted from the POS server 40. After this processing is completed, the flow shifts to step S94.

Subsequently, in step S94, the play history information is displayed. In this processing, the CPU 536 causes the image display device 502 to display the play history information stored in the hard disk drive 542 after being transmitted from the POS server 40. This allows the terminal user to receive services corresponding to the play history information. Immediately after the foregoing processing is completed, this subroutine is terminated.

In the POS server 40, on the other hand, play history information is initially demanded in the processing of step S101. In this processing, the CPU 410 transmits to the network game server 10 the personal identification information transmitted from the POS terminal 50 and a signal requesting a transmission of play history information corresponding to the personal identification information. After the foregoing processing is completed, the flow shifts to step S102.

Subsequently, in the processing of step S102, history information is stored. In this processing, the CPU 410 causes the hard disk drive 418 to store the play history information transmitted from the network game server 10. After this processing is completed, the flow shifts to step S103.

Subsequently, in the processing of step S103, play history information is transmitted. In this processing, the CPU 410 transmits to the POS terminal 50 the play history information stored in the hard disk drive 418 after being transmitted from the network game server 10. Immediately after the foregoing processing is completed, this subroutine is terminated.

In the network game server 10, play history information is initially stored in the processing of step S111. In this processing, the CPU 110 causes the hard disk drive 118 to store the play history information transmitted from the game terminal 20. After this processing is completed, the flow shifts to step S112.

Subsequently, in the processing of step S112, play history information is transmitted. In this processing, from the database stored in the hard disk drive 118, the CPU 110 retrieves play history information corresponding to the personal identification information transmitted from the POS server 40. The CPU 110 transmits thus detected play history information to the POS server 40. Immediately after the foregoing process is completed, this subroutine is terminated.

In the game terminal 20, personal identification information is initially read in the processing of step S121. In this processing, the CPU 236 reads the personal identification information from the ID card of a terminal user passed through the card reader 212. Instead of reading the personal identification information from the ID card, the terminal user may input personal identification information by using the touch sensor 214. After the foregoing processing is completed, the flow shifts to step S122.

Subsequently, in the processing of step S122, play history information is transmitted. In this processing, the CPU 536 transmits to the POS server 40 the play history information concerning utilization such as purchases in shops inputted in the POS terminal 50 together with the personal identification information read in the above-mentioned step S121. Immediately after the foregoing processing is completed, this subroutine is terminated.

In the above-mentioned processes of steps S51 to S52, step S61 to S62, steps S71 to S73, and steps S81 to S87, information corresponding to individual play histories of the second server (network game server) connected to a plurality of POS terminals is made usable in a POS terminal, whereby the play histories can be utilized in a shop where the POS terminal is placed.

Embodiments have been illustrated and described, but it is apparent to a person skilled in the art that the present invention can be modif ied in arrangement and detail. For example, specific configurations of constituents such as structures of image information and storage devices can be modified in terms of design as appropriate. We, therefore, claim rights to all variations and modifications coming with the scope of the claims.

## Claims

1. A network game system (1) including a network game server (10) and a game terminal (20, 22, 24) connected to the network game server,
the network game server (10) comprising:
a database (118) storing therein personal utilization history information managed in relation to user identification information for specifying a user concerning a utilization history of a shop or network shopping by the user, and a plurality of event information items of the shop or network shopping;
first receiving means (122) for receiving user identification information concerning a player and type discriminating data defining a type of game program chosen by the player transmitted from the game terminal;
retrieving means (110, 114) for referring to the database and retrieving the personal utilization history information related to the user identification information received by the first receiving means;
extracting means (110, 114) for extracting according to the personal utilization history information retrieved by the retrieving means the event information item associated therewith from the database;
editing means for editing, according to the type discriminating data transmitted from the game terminal, the event information item extracted by the extracting means; and
first transmitting means (122) for transmitting the event information item edited by the editing means so as to generate a game screen executed in the game terminal;
the game terminal (20, 22, 24) comprising:
storage means (238) storing a plurality of game programs;
means (214) for selecting a game program to be played on the game terminal;
control means (50) for executing the selected game program;
image display means (202) for displaying the game screen;
input means (212, 214) for the user identification information of the player;
second transmitting means (248) for transmitting the user identification information of the player and type discriminating data defining the type of game program chosen to be played to the network game server;
second receiving means (248) for receiving the event information item transmitted from the network game server;
storage means (270) for storing the event information received by the second receiving means; and
drawing means (250) for generating the game screen displayed by the image display means by using the event information item stored in the storage means.

2. A network game system according to claim 1, wherein the editing means is operable to edit the event information into text information, audio data or image data.

3. A network game system according to claim 1, wherein:
the database (118) stores the event information items in association with the type discriminating data; and
the editing means is arranged to extract the event information item stored in the database in accordance with the type discriminating data transmitted by the game terminal.

4. A network game system according to any preceding claim, wherein:
the database (118) stores the event information items in association with scene information for specifying a scene concerning a game image displayed by the game terminal according to the game program;
the extracting means (110, 114) is arranged to extract the event information item and the scene information associated with the event information item;
the first transmitting means (122) is arranged to transmit to the game terminal the event information item and scene information;
the second receiving means (248) is arranged to receive the event information item and scene information transmitted from the network game server (10);
the storage means (270) is configured to store, in association with the scene information received by the second receiving means, the event information item received together with the scene information;
the control means (50) is arranged to output game screen information for specifying a game screen to be displayed to the image display means according to the game program; and
the drawing means (250) is arranged to select the event information item stored in the storage means according to the scene information concerning the game image specified by the game screen information outputted by the control means, and to generate the game screen by using the event information item.

5. A network game system according to any preceding claim, wherein the retrieving means (110, 114) of the network game server (10) is arranged to retrieve the personal utilization history information in further dependence upon the time and date when the game is played at the game terminal (20, 22, 24) and the location of the game terminal (20, 22, 24).

6. A network game server (10), comprising:
a database (118) for storing therein personal utilization history information managed in relation to user identification information for specifying a user concerning a utilization history of a shop or network shopping by the user, and a plurality of event information items of the shop or network shopping;
receiving means (122) for receiving user identification information concerning a player and type discriminating data defining a type of game program chosen by the player transmitted from a game terminal (20, 22, 24) ;
retrieving means (110, 114) for referring to the database and retrieving the personal utilization history information related to the user identification information received by the receiving means;
extracting means (110, 114) for extracting according to the personal utilization history information retrieved by the retrieving means the event information item associated therewith from the database;
editing means for editing, according to the type discriminating data transmitted from the game terminal, the event information item extracted by the extracting means;
transmitting means (122) for transmitting the event information item edited by the editing means so as to generate a game screen executable in the game terminal.

7. A network server according to Claim 6, wherein the editing means is operable to edit the event information into text information, audio data or image data.

8. A network game server according to claim 6, wherein:
the database (118) is configured to store the event information items in association with the type discriminating data; and
the editing means is arranged to extract the event information item stored in the database in accordance with the type discriminating data transmitted by the game terminal.

9. A network game server according to any of Claims 6 to 8, wherein:
the database (118) is configured to store the event information items in association with scene information for specifying a scene concerning a game image displayed by the game terminal according to the game program;
the extracting means (110, 114) is arranged to extract the event information item and the scene information associated with the event information item; and
the transmitting means (122) is arranged to transmit to the game terminal the event information item and scene information.

10. A network game server according to any of Claims 6 to 9, wherein the retrieving means (110, 114) is arranged to retrieve the personal utilization history information in further dependence upon the time and date when the game is played at the game terminal (20, 22, 24) and the location of the game terminal (20, 22, 24).

11. A method of operating a network game system (1) including a network game server (10) and a game terminal (20, 22, 24) connected to the network game server, the method comprising:
causing first receiving means (122) of the network game server to receive user identification information concerning a player and type discriminating data defining a type of game program chosen by the player transmitted from the game terminal;
causing retrieving means (110, 114) of the network game server to refer to a database (118) storing therein personal utilization history information managed in relation to user identification information for specifying a user concerning a utilization history of a shop or network shopping by the user, and a plurality of event information items of the shop or network shopping, and retrieve the personal utilization history information related to the user identification information received by the first receiving means;
causing extracting means (110, 114) of the network game server to extract according to the personal utilization history information retrieved by the retrieving means the event information item associated therewith from the database;
causing editing means of the network game server to edit, according to the type discriminating data transmitted from the game terminal, the event information item extracted by the extracting means; and
causing first transmitting means (122) of the network game server to transmit the event information item edited by the editing means so as to generate a game screen executed in the game terminal;
causing selecting means (214) of the game terminal to select from a plurality of stored game programs a game program to be played on the game terminal;
causing control means (50) of the game terminal to execute the selected game program;
causing image display means (202) of the game terminal to display the game screen;
causing input means (212, 214) of the game terminal to input user identification information of the player;
causing second transmitting means (248) of the game terminal to transmit the user identification information of the player and type discriminating data defining the type of game program chosen to be played to the network game server;
causing second receiving means (248) of the game terminal to receive the event information item transmitted from the network game server;
causing storage means (270) of the game terminal to store the event information received by the second receiving means; and
causing drawing means (250) of the game terminal to generate the game screen displayed by the image display means by using the event information item stored in the storage means.

12. A method of operating network game server (10), comprising:
receiving user identification information concerning a player and type discriminating data defining a type of game program transmitted from a game terminal (20, 22, 24);
referring to a database (118) storing therein personal utilization history information managed in relation to user identification information for specifying a user concerning a utilization history of a shop or network shopping by the user, and a plurality of event information items of the shop or network shopping, and retrieving the personal utilization history information related to the received user identification information;
extracting according to the retrieved personal utilization history information the event information item associated therewith from the database;
editing, according to the type discriminating data transmitted from the game terminal, the extracted event information item; and
transmitting the edited event information item so as to generate a game screen executable in the game terminal.

## Patentansprüche

1. Ein Netzspielsystem (1), das einen Netzspielserver (10) und ein Spielendgerät (20, 22, 24) enthält, das mit dem Netzspielserver verbunden ist,
der Netzspielserver (10) umfassend:
eine Datenbank (118), die darin speichert persönliche Nutzungshistorieninformation, die in Bezug auf Benutzeridentifikationsinformation gemanagt wird zum Spezifizieren eines Benutzers betreffend eine Nutzungshistorie eines Geschäftes oder von Netzeinkäufen durch den Benutzer, und eine Vielzahl von Ereignisinformationselementen des Geschäftes oder der Netzeinkäufe;
ein erstes Empfangsmittel (122) zum Empfangen von Benutzeridentifikationsinformation betreffend einen Spieler und Typunterscheidungsdaten, die einen Typ eines Spielprogramms definieren, das durch den Benutzer gewählt wird, die von dem Endgerät übertragen wird;
ein Abfragemittel (110, 114) zum Verweisen auf die Datenbank und Abfragen der persönlichen Nutzungshistorieninformation bezogen auf die Benutzeridentifikationsinformation, die durch das erste Empfangsmittel empfangen wird;
ein Extraktionsmittel (110, 114) zum Extrahieren gemäß der persönlichen Nutzungshistorieninformation, die durch das Abfragemittel abgefragt wird, des Ereignisinformationselementes, das damit in Verbindung steht, von der Datenbank;
ein Bearbeitungsmittel zum Bearbeiten, gemäß den Typunterscheidungsdaten, die von dem Spielendgerät übertragen werden, des Ereignisinformationselementes, das durch das Extraktionsmittel extrahiert wird; und
ein erstes Übertragungsmittel (122) zum Übertragen des Ereignisinformationselementes, das durch das Bearbeitungsmittel bearbeitet wird, um so einen Spielbildschirm zu generieren, der in dem Spielendgerät ausgeführt wird;
das Spielendgerät (20, 22, 24) umfassend:
ein Speichermittel (238), das eine Vielzahl von Spielprogrammen speichert;
ein Mittel (214) zum Auswählen eines Spielprogramms, das auf dem Spielendgerät zu spielen ist;
ein Steuermittel (50) zum Ausführen des ausgewählten Spielprogramms;
ein Bildanzeigemittel (202) zum Anzeigen des Spielbildschirms;
ein Eingabemittel (212, 214) für die Benutzeridentifikationsinformation des Spielers;
ein zweites Übertragungsmittel (248) zum Übertragen der Benutzeridentifikationsinformation des Spielers und Typunterscheidungsdaten, die den Typ des Spielprogramms definieren, das ausgewählt wird zu spielen, zu dem Netzspielserver;
ein zweites Empfangsmittel (248) zum Empfangen des Ereignisinformationselementes, das von dem Netzspielserver übertragen wird;
ein Speichermittel (270) zum Speichern der Ereignisinformation, die durch das zweite Empfangsmittel empfangen wird; und
ein Zeichenmittel (250) zum Generieren des Spielbildschirms, der durch das Bildanzeigemittel angezeigt wird, durch Verwenden des Ereignisinformationselementes, das in dem Speichermittel gespeichert ist.

2. Ein Netzspielsystem nach Anspruch 1, wobei das Bearbeitungsmittel betriebsfähig ist, die Ereignisinformation in Textinformation, Audiodaten oder Bilddaten zu bearbeiten.

3. Ein Netzspielsystem nach Anspruch 1, wobei:
die Datenbank (118) die Ereignisinformationselemente in Verbindung mit den Typunterscheidungsdaten speichert; und
das Bearbeitungsmittel angeordnet ist, das Ereignisinformationselement zu extrahieren, das in der Datenbank gespeichert ist in Übereinstimmung mit den Typunterscheidungsdaten, die durch das Spielendgerät übertragen werden.

4. Ein Netzspielsystem nach einem beliebigen vorangehenden Anspruch, wobei:
die Datenbank (118) die Ereignisinformationselemente speichert in Verbindung mit Szeneninformation zum Spezifizieren einer Szene betreffend ein Spielbild, das angezeigt wird durch das Spielendgerät gemäß dem Spielprogramm;
das Extraktionsmittel (110, 114) angeordnet ist, das Ereignisinformationselement und die Szeneninformation, die mit dem Ereignisinformationselement in Verbindung steht, zu extrahieren;
das erste Übertragungsmittel (122) angeordnet ist, zu dem Spielendgerät das Ereignisinformationselement und die Szeneninformation zu übertragen;
das zweite Empfangsmittel (248) angeordnet ist, das Ereignisinformationselement und die Szeneninformation zu empfangen, die von dem Netzspielserver (10) übertragen werden;
das Speichermittel (270) konfiguriert ist, in Verbindung mit der Szeneninformation, die durch das zweite Empfangsmittel empfangen wird, das Ereignisinformationselement, das zusammen mit der Szeneninformation empfangen wird, zu speichern;
das Steuermittel (50) angeordnet ist, Spielbildschirminformation auszugeben zum Spezifizieren eines Spielbildschirms, der anzuzeigen ist zu dem Bildanzeigemittel gemäß dem Spielprogramm; und
das Zeichenmittel (250) angeordnet ist, das Ereignisinformationselement auszuwählen, das in dem Speichermittel gespeichert ist gemäß der Szeneninformation betreffend das Spielbild, das durch die Spielbildschirminformation spezifiziert wird, die durch das Steuermittel ausgegeben wird, und den Spielbildschirm durch Verwenden des Ereignisinformationselementes zu generieren.

5. Ein Netzspielsystem nach einem beliebigen vorangehenden Anspruch, wobei das Abfragemittel (110, 114) des Netzspielservers (10) angeordnet ist, die persönliche Nutzungshistorieninformation abzufragen in weiterer Abhängigkeit von der Zeit und dem Datum, wann das Spiel in dem Spielendgerät (20, 22, 24) gespielt wird, und dem Standort des Spielendgerätes (20, 22, 24).

6. Ein Netzspielserver (10), umfassend:
eine Datenbank (118) zum Speichern darin von persönlicher Nutzungshistorieninformation, die gemanagt wird in Bezug auf Benutzeridentifikationsinformation zum Spezifizieren eines Benutzers betreffend eine Nutzungshistorie eines Geschäftes oder von Netzeinkäufen durch den Benutzer, und einer Vielzahl von Ereignisinformationselementen des Geschäftes oder der Netzeinkäufe;
ein Empfangsmittel (122) zum Empfangen von Benutzeridentifikationsinformation betreffend einen Spieler und Typunterscheidungsdaten, die einen Typ eines Spielprogramms definieren, das durch den Spieler ausgewählt wird, die von einem Spielendgerät (20, 22, 24) übertragen wird;
ein Abfragemittel (110, 114) zum Verweisen auf die Datenbank und Abfragen der persönlichen Nutzungshistorieninformation bezogen auf die Benutzeridentifikationsinformation, die durch das Empfangsmittel empfangen wird;
ein Extraktionsmittel (110, 114) zum Extrahieren gemäß der persönlichen Nutzungshistorieninformation, die durch das Abfragemittel abgefragt wird, des Ereignisinformationselementes, das damit in Verbindung steht, aus der Datenbank;
ein Bearbeitungsmittel zum Bearbeiten, gemäß den Typunterscheidungsdaten, die von dem Spielendgerät übertragen werden, des Ereignisinformationselementes, das durch das Extraktionsmittel extrahiert wird;
ein Übertragungsmittel (122) zum Übertragen des Ereignisinformationselementes, das durch das Bearbeitungsmittel bearbeitet wird, um so einen Spielbildschirm zu generieren, der in dem Spielendgerät ausgeführt werden kann.

7. Ein Netzserver nach Anspruch 6, wobei das Bearbeitungsmittel betriebsfähig ist, die Ereignisinformation in Textinformation, Audiodaten oder Bilddaten zu bearbeiten.

8. Ein Netzspielserver nach Anspruch 6, wobei:
die Datenbank (118) konfiguriert ist, die Ereignisinformationselemente in Verbindung mit den Typunterscheidungsdaten zu speichern; und
das Bearbeitungsmittel angeordnet ist, das Ereignisinformationselement zu extrahieren, das in der Datenbank gespeichert ist in Übereinstimmung mit den Typunterscheidungsdaten, die durch das Spielendgerät übertragen werden.

9. Ein Netzspielserver nach beliebigen von Ansprüchen 6 bis 8, wobei:
die Datenbank (118) konfiguriert ist, die Ereignisinformationselemente zu speichern in Verbindung mit Szeneninformation zum Spezifizieren einer Szene betreffend ein Spielbild, das angezeigt wird durch das Spielendgerät gemäß dem Spielprogramm;
das Extraktionsmittel (110, 114) angeordnet ist, das Ereignisinformationselement und die Szeneninformation, die mit dem Ereignisinformationselement in Verbindung steht, zu extrahieren; und
das Übertragungsmittel (122) angeordnet ist, zu dem Spielendgerät das Ereignisinformationselement und die Szeneninformation zu übertragen.

10. Ein Netzspielserver nach beliebigen von Ansprüchen 6 bis 9, wobei das Abfragemittel (110, 114) angeordnet ist, die persönliche Nutzungshistorieninformation abzufragen in weiterer Abhängigkeit von der Zeit und dem Datum, wann das Spiel in dem Spielendgerät (20, 22, 24) gespielt wird, und dem Standort des Spielendgerätes (20, 22, 24).

11. Ein Verfahren zum Betreiben eines Netzspielsystems (1), das einen Netzspielserver (10) und ein Spielendgerät (20, 22, 24) enthält, das mit dem Netzspielserver verbunden ist, das Verfahren umfassend:
Veranlassen des ersten Empfangsmittels (122) des Netzspielservers, Benutzeridentifikationsinformation betreffend einen Spieler und Typunterscheidungsdaten, die einen Typ eines Spielprogramms definieren, das durch den Spieler ausgewählt wird, die von dem Spielendgerät übertragen wird, zu empfangen;
Veranlassen des Abfragemittels (110, 114) des Netzspielservers, auf eine Datenbank (118) zu verweisen, die darin speichert persönliche Nutzungshistorieninformation, die gemanagt wird in Bezug auf Benutzeridentifikationsinformation zum Spezifizieren eines Benutzers betreffend eine Nutzungshistorie eines Geschäftes oder von Netzeinkäufen durch den Benutzer, und eine Vielzahl von Ereignisinformationselementen des Geschäftes oder der Netzeinkäufe, und Abfragen der persönlichen Nutzungshistorieninformation bezogen auf die Benutzeridentifikationsinformation, die durch das erste Empfangsmittel empfangen wird;
Veranlassen des Extraktionsmittels (110, 114) des Netzspielservers, gemäß der persönlichen Nutzungshistorieninformation, die durch das Abfragemittel abgefragt wird, das Ereignisinformationselement, das damit in Verbindung steht, von der Datenbank zu extrahieren;
Veranlassen des Bearbeitungsmittels des Netzspielservers, gemäß den Typunterscheidungsdaten, die von dem Spielendgerät übertragen werden, das Ereignisinformationselement, das durch das Extraktionsmittel extrahiert wird, zu bearbeiten; und
Veranlassen des ersten Übertragungsmittels (122) des Netzspielservers, das Ereignisinformationselement, das durch das Bearbeitungsmittel bearbeitet wird, zu übertragen, um so einen Spielbildschirm zu generieren, der in dem Spielendgerät ausgeführt wird;
Veranlassen des Auswahlmittels (214) des Spielendgerätes, aus einer Vielzahl von gespeicherten Spielprogrammen ein Spielprogramm auszuwählen, das in dem Spielendgerät zu spielen ist;
Veranlassen des Steuermittels (50) des Spielendgerätes, das ausgewählte Spielprogramm auszuführen;
Veranlassen des Bildanzeigemittels (202) des Spielendgerätes, den Spielbildschirm anzuzeigen;
Veranlassen des Eingabemittels (212, 214) des Spielendgerätes, Benutzeridentifikationsinformation des Spielers einzugeben;
Veranlassen des zweiten Übertragungsmittels (248) des Spielendgerätes, die Benutzeridentifikationsinformation des Spielers und Typunterscheidungsdaten, die den Typ eines Spielprogramms definieren, das ausgewählt wird zu spielen, zu dem Netzspielserver zu übertragen;
Veranlassen des zweiten Empfangsmittels (248) des Spielendgerätes, das Ereignisinformationselement, das von dem Netzspielserver übertragen wird, zu empfangen;
Veranlassen des Speichermittels (270) des Spielendgerätes, die Ereignisinformation, die durch das zweite Empfangsmittel empfangen wird, zu speichern; und
Veranlassen des Zeichenmittels (250) des Spielendgerätes, den Spielbildschirm zu generieren, der durch das Bildanzeigemittel angezeigt wird, durch Verwenden des Ereignisinformationselementes, das in dem Speichermittel gespeichert ist.

12. Ein Verfahren zum Betreiben eines Netzspielservers (10), umfassend:
Empfangen von Benutzeridentifikationsinformation betreffend einen Spieler und Typunterscheidungsdaten, die einen Typ eines Spielprogramms definieren, die von einem Spielendgerät (20, 22, 24) übertragen wird;
Verweisen auf eine Datenbank (118), die darin speichert persönliche Nutzungshistorieninformation, die gemanagt wird in Bezug auf Benutzeridentifikationsinformation zum Spezifizieren eines Benutzers betreffend eine Nutzungshistorie eines Geschäftes oder von Netzeinkäufen durch den Benutzer, und eine Vielzahl von Ereignisinformationselementen des Geschäftes oder der Netzeinkäufe, und Abfragen der persönlichen Nutzungshistorieninformation bezogen auf die empfangene Benutzeridentifikationsinformation;
Extrahieren gemäß der abgefragten persönlichen Nutzungshistorieninformation des Ereignisinformationselementes, das damit in Verbindung steht, aus der Datenbank;
Bearbeiten, gemäß den Typunterscheidungsdaten, die von dem Spielendgerät übertragen werden, des extrahierten Ereignisinformationselementes; und
Übertragen des bearbeiteten Ereignisinformationselementes, um so einen Spielbildschirm zu generieren, der in dem Spielendgerät ausgeführt werden kann.

## Revendications

1. Système de jeu en réseau (1) incluant un serveur de jeu en réseau (10) et une borne de jeu (20, 22, 24) reliée au serveur de jeu en réseau,
le serveur de jeu en réseau (10) comprenant:
une base de données (118) pour y stocker une information personnelle d'historique d'utilisation gérée en relation à une information d'identification d'utilisateur pour spécifier un utilisateur en ce qui concerne un historique d'utilisation d'une boutique ou d'un magasinage sur le réseau par l'utilisateur, et une pluralité d'articles d'informations d'évènements de la boutique ou du magasinage sur le réseau;
un premier moyen de réception (122) pour recevoir une information d'identification d'utilisateur concernant un joueur et des données de distinction de type définissant un type de programme de jeu choisi par le joueur transmises depuis la borne de jeu;
un moyen de récupération (110, 114) pour se référer à la base de données et récupérer l'information personnelle d'historique d'utilisation se rapportant à l'information d'identification d'utilisateur reçue par le premier moyen de réception;
un moyen d'extraction (110, 114) pour extraire, selon l'information personnelle d'historique d'utilisation récupérée par le moyen de récupération, l'article d'information d'évènement qui lui est associé, à partir de la base de données;
un moyen d'édition pour éditer, selon les données de distinction de type transmises depuis la borne de jeu, l'article d'information d'évènement extrait par le moyen d'extraction; et
un premier moyen de transmission (122) pour transmettre l'article d'information d'évènement édité par le moyen d'édition de manière à générer un écran de jeu exécuté dans la borne de jeu;
la borne de jeu (20, 22, 24) comprenant:
un moyen de stockage (238) stockant plusieurs programmes de jeux;
un moyen (214) pour sélectionner un programme de jeu devant être joué sur la borne de jeu;
un moyen de commande (50) pour exécuter le programme de jeu sélectionné;
un moyen d'affichage d'images (202) pour afficher l'écran de jeu;
un moyen d'entrée (212, 214) pour l'information d'identification d'utilisateur du joueur;
un second moyen de transmission (248) pour transmettre au serveur de jeu en réseau l'information d'identification d'utilisateur du joueur et des données de distinction de type définissant le type de programme de jeu choisi devant être joué;
un second moyen de réception (248) pour recevoir l'article d'information d'évènement transmis depuis le serveur de jeu en réseau;
un moyen de stockage (270) pour stocker l'information d'évènement reçue par le second moyen de réception; et
un moyen de dessin (250) pour générer l'écran de jeu affiché par le moyen d'affichage d'images en utilisant l'article d'information d'évènement stocké dans le moyen de stockage.

2. Système de jeu en réseau selon la revendication 1, dans lequel le moyen d'édition est fonctionnel pour éditer l'information d'évènement en information textuelle, en données audio ou en données d'images.

3. Système de jeu en réseau selon la revendication 1, dans lequel:
la base de données (118) stocke les articles d'informations d'évènements en association avec les données de distinction de type; et
le moyen d'édition est agencé de façon à extraire l'article d'information d'évènement stocké dans la base de données en accord avec les données de distinction de type transmises par la borne de jeu.

4. Système de jeu en réseau selon l'une quelconque des revendications précédentes, dans lequel:
la base de données (118) stocke les articles d'informations d'évènements en association avec une information de scène pour spécifier une scène concernant une image de jeu affichée par la borne de jeu selon le programme de jeu;
le moyen d'extraction (110, 114) est agencé pour extraire l'article d'information d'évènement et l'information de scène associée à l'article d'information d'évènement;
le premier moyen de transmission (122) est agencé pour transmettre à la borne de jeu l'article d'information d'évènement et l'information de scène;
le second moyen de réception (248) est agencé pour recevoir l'article d'information d'évènement et l'information de scène transmis depuis le serveur de jeu en réseau (10);
le moyen de stockage (270) est configuré pour stocker, en association avec l'information de scène reçue par le second moyen de réception, l'article d'information d'évènement reçu en même temps que l'information de scène;
le moyen de commande (50) est agencé pour délivrer en sortie une information d'écran de jeu pour spécifier un écran de jeu à afficher au moyen d'affichage d'images selon le programme de jeu; et
le moyen de dessin (250) est agencé pour sélectionner l'article d'information d'évènement stocké dans le moyen de stockage selon l'information de scène concernant l'image de jeu spécifiée par l'information d'écran de jeu délivrée en sortie par le moyen de commande, et pour générer l'écran de jeu en utilisant l'article d'information d'évènement.

5. Système de jeu en réseau selon l'une quelconque des revendications précédentes, dans lequel le moyen de récupération (110, 114) du serveur de jeu en réseau (10) est agencé pour récupérer l'information personnelle d'historique d'utilisation en fonction, en plus, de l'heure et de la date auxquelles le jeu est joué à la borne de jeu (20, 22, 24) et de l'emplacement de la borne de jeu (20, 22, 24).

6. Serveur de jeu en réseau (10), comprenant:
une base de données (118) pour y stocker une information personnelle d'historique d'utilisation gérée en relation avec une information d'identification d'utilisateur pour spécifier un utilisateur en ce qui concerne un historique d'utilisation d'une boutique ou d'un magasinage sur le réseau par l'utilisateur, et une pluralité d'articles d'informations d'évènements de la boutique ou du magasinage sur le réseau;
un moyen de réception (122) pour recevoir une information d'identification d'utilisateur concernant un joueur et des données de distinction de type définissant un type de programme de jeu choisi par le joueur transmises depuis une borne de jeu (20, 22, 24);
un moyen de récupération (110, 114) pour se référer à la base de données et récupérer l'information personnelle d'historique d'utilisation se rapportant à l'information d'identification d'utilisateur reçue par le moyen de réception;
un moyen d'extraction (110, 114) pour extraire, selon l'information personnelle d'historique d'utilisation récupérée par le moyen de récupération, l'article d'information d'évènement qui lui est associé, à partir de la base de données;
un moyen d'édition pour éditer, selon les données de distinction de type transmises depuis la borne de jeu, l'article d'information d'évènement extrait par le moyen d'extraction; et
un moyen de transmission (122) pour transmettre l'article d'information d'évènement édité par le moyen d'édition de manière à générer un écran de jeu exécuté dans la borne de jeu.

7. Serveur réseau selon la revendication 6, dans lequel le moyen d'édition est fonctionnel pour éditer l'information d'évènement en information textuelle, en données audio ou en données d'images.

8. Serveur de jeu en réseau selon la revendication 6, dans lequel:
la base de données (118) est configurée pour stocker les articles d'informations d'évènements en association avec les données de distinction de type; et
le moyen d'édition est agencé de façon à extraire l'article d'information d'évènement stocké dans la base de données en accord avec les données de distinction de type transmises par la borne de jeu.

9. Serveur de jeu en réseau selon l'une quelconque des revendications 6 à 8, dans lequel:
la base de données (118) est configurée pour stocker les articles d'informations d'évènements en association avec une information de scène pour spécifier une scène concernant une image de jeu affichée par la borne de jeu selon le programme de jeu;
le moyen d'extraction (110, 114) est agencé pour extraire l'article d'information d'évènement et l'information de scène associée à l'article d'information d'évènement; et
le moyen de transmission (122) est agencé pour transmettre à la borne de jeu l'article d'information d'évènement et l'information de scène.

10. Serveur de jeu en réseau selon l'une quelconque des revendications 6 à 9, dans lequel le moyen de récupération (110, 114) est agencé pour récupérer l'information personnelle d'historique d'utilisation en fonction, en plus, de l'heure et de la date auxquelles le jeu est joué à la borne de jeu (20, 22, 24) et de l'emplacement de la borne de jeu (20, 22, 24).

11. Procédé d'exploitation d'un système de jeu en réseau (1) incluant un serveur de jeu en réseau (10) et une borne de jeu (20, 22, 24) reliée au serveur de jeu en réseau, le procédé comprenant:
amener un premier moyen de réception (122) du serveur de jeu en réseau à recevoir une information d'identification d'utilisateur concernant un joueur et des données de distinction de type définissant un type de programme de jeu choisi par le joueur transmises depuis la borne de jeu;
amener un moyen de récupération (110, 114) du serveur de jeu en réseau à se référer à une base de données (118) dans laquelle est stockée une information personnelle d'historique d'utilisation gérée en relation avec une information d'identification d'utilisateur pour spécifier un utilisateur en ce qui concerne un historique d'utilisation d'une boutique ou d'un magasinage sur le réseau par l'utilisateur, et une pluralité d'articles d'informations d'évènements de la boutique ou du magasinage sur le réseau, et à récupérer l'information personnelle d'historique d'utilisation se rapportant à l'information d'identification d'utilisateur reçue par le premier moyen de réception;
amener un moyen d'extraction (110, 114) du serveur de jeu en réseau à extraire, selon l'information personnelle d'historique d'utilisation récupérée par le moyen de récupération, l'article d'information d'évènement qui lui est associé, à partir de la base de données;
amener un moyen d'édition du serveur de jeu en réseau à éditer, selon les données de distinction de type transmises depuis la borne de jeu, l'article d'information d'évènement extrait par le moyen d'extraction; et
amener un premier moyen de transmission (122) du serveur de jeu en réseau à transmettre l'article d'information d'évènement édité par le moyen d'édition de manière à générer un écran de jeu exécuté dans la borne de jeu;
amener un moyen de sélection (214) de la borne de jeu à sélectionner parmi une pluralité de programmes de jeux stockés un programme de jeu devant être joué sur la borne de jeu;
amener un moyen de commande (50) de la borne de jeu à exécuter le programme de jeu sélectionné;
amener un moyen d'affichage d'images (202) de la borne de jeu à afficher l'écran de jeu;
amener un moyen d'entrée (212, 214) de la borne de jeu à introduire une information d'identification d'utilisateur du joueur;
amener un second moyen de transmission (248) de la borne de jeu à transmettre au serveur de jeu en réseau l'information d'identification d'utilisateur du joueur et des données de distinction de type définissant le type de programme de jeu choisi devant être joué;
amener un second moyen de réception (248) de la borne de jeu à recevoir l'article d'information d'évènement transmis depuis le serveur de jeu en réseau;
amener un moyen de stockage (270) de la borne de jeu à stocker l'information d'évènement reçue par le second moyen de réception; et
amener un moyen de dessin (250) de la borne de jeu à générer l'écran de jeu affiché par le moyen d'affichage d'images en utilisant l'article d'information d'évènement stocké dans le moyen de stockage.

12. Procédé d'exploitation d'un serveur de jeu en réseau (10), comprenant:
recevoir une information d'identification d'utilisateur concernant un joueur et des données de distinction de type définissant un type de programme de jeu transmises depuis une borne de jeu (20, 22, 24);
se référer à une base de données (118) dans laquelle est stockée une information personnelle d'historique d'utilisation gérée en relation avec une information d'identification d'utilisateur pour spécifier un utilisateur en ce qui concerne un historique d'utilisation d'une boutique ou d'un magasinage sur le réseau par l'utilisateur, et une pluralité d'articles d'informations d'évènements de la boutique ou du magasinage sur le réseau, et récupérer l'information personnelle d'historique d'utilisation se rapportant à l'information d'identification d'utilisateur reçue;
extraire, selon l'information personnelle d'historique d'utilisation reçue, l'article d'information d'évènement qui lui est associé, à partir de la base de données;
éditer, selon les données de distinction de type transmises depuis la borne de jeu, l'article d'information d'évènement extrait; et
transmettre l'article d'information d'événement édité de manière à générer un écran de jeu exécutable dans la borne de jeu.
